(19) Europäisches Patentamt
European Patent Office
Office européen des brevets

(11)  **EP 1 205 103 B1**

(12)  **EUROPEAN PATENT SPECIFICATION**

(45) Date of publication and mention
of the grant of the patent:
**15.08.2007   Bulletin 2007/33**

(51) Int Cl.:
***A01G 7/06*** (2006.01)

(21) Application number: **00830738.1**

(22) Date of filing: **08.11.2000**

(54)  **Device for treating a tree by injection**

Vorrichtung zur Behandlung eines Baumes durch Injektierung

Dispositif pour traîter un arbre par injection

(84) Designated Contracting States:
**AT BE CH CY DE DK ES FI FR GB GR IE IT LI LU MC NL PT SE TR**

(43) Date of publication of application:
**15.05.2002   Bulletin 2002/20**

(73) Proprietor: **Piccari Ricci, Pier Paolo**
**47900 Rimini (IT)**

(72) Inventor: **Piccari Ricci, Pier Paolo**
**47900 Rimini (IT)**

(74) Representative: **Lanzoni, Luciano**
**c/o BUGNION S.p.A.**
**Via A. Valentini, 11/15**
**47900 Rimini (IT)**

(56) References cited:
**WO-A-87/07473          WO-A-94/25238**
**DE-U- 8 815 213         GB-A- 2 231 763**

• **DATABASE WPI Section PQ, Week 199749 Derwent Publications Ltd., London, GB; Class P13, AN 1997-527390 XP002164426 -& CN 1 127 064 A (QIN F), 24 July 1996 (1996-07-24)**

**Description**

The present invention relates to an endotherapy device for arboreal plants.

Endotherapy is a method for treating arboreal plants by means of phytotherapeutic formulations providing protection against parasite and/or fungal attacks, which essentially consists of injecting the phytotherapeutic formulation inside the trunk of the plant. The phytotherapeutic formulation thus injected is absorbed by the trunk of the plant and, through the lymph system of the plant, is sent into circulation and has its effect.

The use is known of actual common syringes or pumps with needle, both manually operated. By inserting the needle into one or more hole, previously obtained in the trunk of the plant, the formulation contained in the syringe or in the pump is injected (once or several times depending on the quantity of formulation required) and, at the end of the treatment, the holes are plugged with filler or putty.

These devices for arboreal plant endotherapy, also known as "simple injection" devices, have numerous drawbacks. In particular, the volumes of phytotherapeutic formulation able to be administered in each individual injection are very limited and operations are totally manual, leading to excessively long application times. The guarantee of the quality of the intervention is based solely on manual operations. Verification and control over the doses of phytotherapeutic formulation to be applied for each vegetable species and for each plant is left exclusively to the operator. There is no inter-relationship automatically structured with the outside environment or with the system constituted by the plant. Therefore, external climatic parameters and parameters within the plant (also physiological ones), which have fundamental importance to decide both the extend and the appropriateness of the endotherapeutic intervention, are not adequately taken into consideration.

Also known are arboreal plant endotherapy devices provided with graduated cylinders with internal piston, with oleo-dynamic operation activated by a pump. The pump is started or stopped manually by means of a lever. Some conduits (usually 3 or 5) connect the cylinder to an equal number of needles for injection into the trunk. The needles are inserted into holes previously obtained in the trunk by means of a drill. A certain quantity of phytotherapeutic formulation, manually determined by the operator using the graduated scale, is, at first, aspirated into the cylinder from a tank. To inject the phytotherapeutic into the trunk of the plant, the operator activates the pump in the opposite direction, and manually stops the operation of the pump when, in his/her opinion, reached by observing the graduated scale, the plant has received a correct dose of formulation.

The mechanisation of the aspiration and of the injection operations allows to handle large volumes of formulation in cylinders of considerable size.

However, this type of devices for arboreal plant endotherapy is not free from drawbacks. In particular, operating pressure, determined by the head of the pump, is neither evaluated nor controlled in any way. Therefore, there is no control over the pressure whereat the phytotherapeutic formulations are injected into the trunk of the plant and no consideration is given to the maximum physiological capacity of each individual plant to absorb a certain flow of formulation in the unit of time, with the risk of damaging the vascular tissues of the plant or to disperse the phytotherapeutic formulation externally if certain pressure values are exceeded; such values depend on the vegetable species, on the conditions and state of the plant to be treated. Operations are still all substantially manual, particularly dosage. The external environmental parameters and the characteristic parameters of the plant (in particular the physiological ones) are not taken into adequate consideration automatically, leaving the decision as to the appropriateness and conditions of the interventions completely up to the operator.

To eliminate the risk of damaging the vascular tissues of the plant with excessive injection pressures and to have a correct dosage of the phytotherapeutic formulation, endotherapy devices for arboreal plants are known in which the needles inserted into the trunk of the plant are connected, by means of corresponding conduits, to bags of the kind used for intravenous injections, so that the injection takes place through the action of gravity. The bags contain dosed quantities of formulation and the injection pressure is determined by the weight of the formulation present in the bag.

These devices also have drawbacks. In particular, the bags need to be refilled or replaced periodically, do to the sizeable volumes to be injected with respect to the standard volume of the bags (generally from 300 cc to 500 cc). Application times are particularly long, being able to vary, depending on the quantity of formulation and on the absorption capacity of the plant, from 5-10 minutes to 24 hours and more. The phytotherapeutic formulation is subjected to the conditionings of environmental and climatic factors, such as illumination and temperature, which can alter the solution and activity of the active ingredient in the formulation itself. Plants need to be monitored throughout the duration of the treatment: leaving unattended the bags containing the product may entail risks of damaging the bags themselves or the injection system, with the consequent dispersion of the formulation into the environment which determines a hygienic and health risk, as well as the hazard of the formulation coming in contact with persons, in particular in the urban environment and especially for children. Once again, the external environmental parameters and the characteristic parameters of the plant (in particular, the physiological ones) are not taken in due consideration in an automatic manner, leaving the decision on the appropriateness and on the conditions of the interventions completely up to the operator.

The aim of the present invention is to overcome the drawbacks described above, making available a device for arboreal plant endotherapy which allows first of all to inject the required dose of formulation in an automatic and exact manner.

A device according to the preamble of claim 1 is known from GB-A-2 231 763.

It also allows to verify and control the dose to be applied in an extremely rigorous manner. It is important to stress that each dose to be administered, as well as the appropriateness of its administration, are correlated with the actual state of the plant, with the external climatic parameters and with those characteristic and intrinsic of the plant and of the environment in which it lives.

It is also possible to inject the doses with great caution and control, in terms of the pressure of the injected fluid, simultaneously with times that have been optimised to the best possible extend within the bounds of the protection of the treated plant.

The device further allows to pre-set interventions also on multiple plants at the same time, *ex-situ,* in a remote manner, by means of the intelligent apparatus with which it is provided. Treatments are also perfectly ecological and with no pollution or risk of dispersion of chemical materials, or of the workers' exposure thereto.

These aims and others beside, which shall become more readily apparent in the course of the description that follows, are reached, in accordance with the present invention by a device for arboreal plant endotherapy as described in the accompanying claims.

The invention is described in greater detail hereafter with the aid of the drawings, which represent an embodiment provided purely by way of non limiting example.

- Figure 1 shows a first schematic embodiment of the invention.
- Figure 2 shows a second schematic embodiment of the invention.
- Figure 3 shows the needle used by the invention, with three other constructive types thereof.
- Figure 4 shows a third schematic embodiment of the invention, with a displacement sensor removed, the better to highlight the other characteristics.
- Figure 5 shows a fourth schematic embodiment of the invention, with a displacement sensor removed, the better to highlight the other characteristics.
- Figure 6 shows a fifth embodiment of the invention, with a displacement sensor removed, the better to highlight the other characteristics.
- Figure 7 shows a version of the invention, by way of example, in portable form, in a sixth schematic embodiment.
- Figures 8 and 9 show two examples of functions for regulating the actuation of the piston as per the invention.
- Figure 10 shows a schematic flow chart of a procedure for determining the formulation dose.
- Figure 11 shows a schematic flow chart of a procedure for controlling the piston of the invention.
- Figure 12 shows a schematic flow chart of a variation of the above procedure for controlling the piston.
- Figure 13 shows, at the top, a schematic flow chart of a procedure for controlling the operating pressure on the formulation of the invention, and, at the bottom, a computing sub-procedure, applied to the flow chart as per Figure 12.

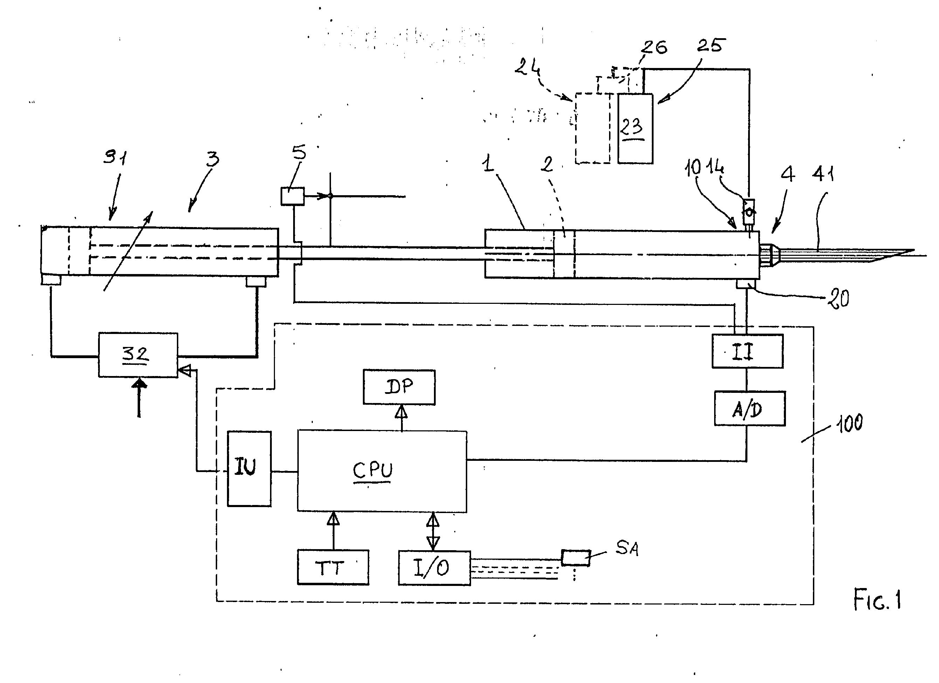

With reference to the figures, the subject endotherapy device comprises a hollow cylinder (1) provided with piston (2) and means (3) for actuating its motion, which can be any, for instance as shown in Figure 1, of the fluid-dynamic type, with double acting jack (31) and distributing valve (32), whereto the moving fluid is supplied.

The device further comprises at least an injection needle (41,42,43,44) and means (4) for connecting the needle (41,42,43,44) to the cylinder (1), to inject into the trunk of a plant at least a dose (VDOS(K)) of a phytotherapeutic formulation loaded in the cylinder (1).

In principle, the device is provided with an intelligent electronic apparatus (100) which comprises:

- at least a central processing unit (CPU), for the automatic intelligent and computerised control of the device;
- at least a keyboard (TT) for entering data manually and for managing the commands for the device, connected to the central unit (CPU);
- at least an analogue digital (A/D) converter connected to the central unit (CPU) and coupled to at least an output interface (II) to condition at least signals coming from a displacement sensor (5) to detect the position of the piston (2) in the cylinder;
- at least an output interface (IU) interposed between the central processing unit (CPU) and the means (3) for actuating the motion of the piston (2).

The central processing unit (CPU), which comprises at least a first data input/output port, in correspondence with at least an input/output peripheral (I/O) connected to the central unit (CPU) and which advantageously is connected to a display (DP), implements a program which essentially comprises:

- a procedure for determining the dose (VDOS(K)) of formulation to be administered to a plant;

- a procedure for controlling the means (3) for actuating the movement of the piston (2) as a function of the dose (VDOS(K)) to be administered.

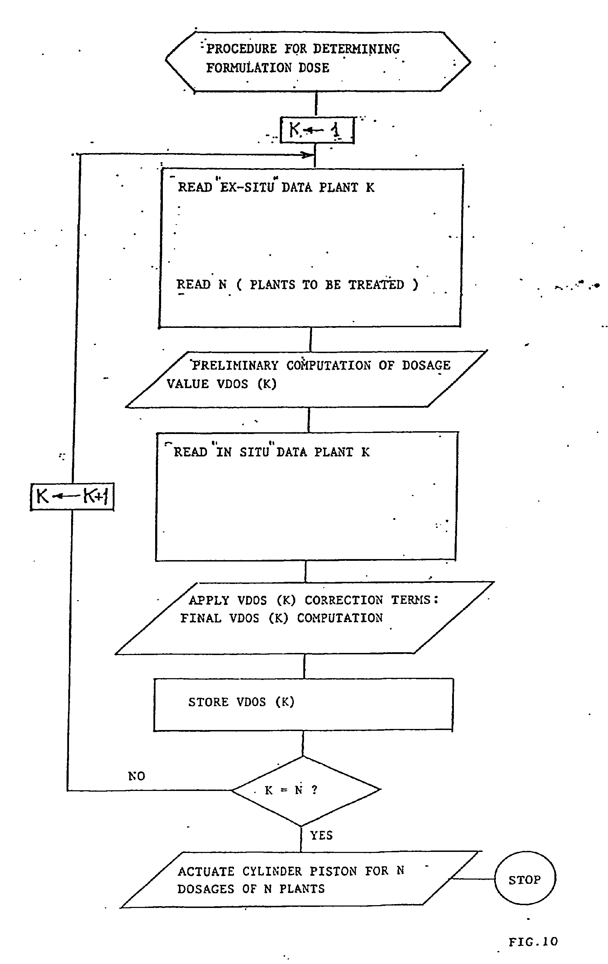

More specifically, with reference to Figure 10, the procedure for determining the dose (VDOS(K)) to be administered to the plant is a cyclical set repeated in sequence as many times as there are plants to be treated.

The procedure comprises:

- at least a block for reading at least data relating to species, state and characteristics of the plant, data relating at least to a formulation which can be administered to the plant, in response to an adversity (term that normally indicates parasitic or fungal aggressions or the like) or for its prevention, as well as environmental data;
- at least a first sub-procedure for computing the dose (VDOS(K)) of formulation to be administered to the plant according to the data read from the reading block.

Preferably the reading block also comprises detailed geographical data to locate the plant.

Advantageously, the data acquired by the reading block are subdivided at least into a first set of data acquired *ex-situ* prior to a current endotherapeutic treatment of the plant and into a second set of data acquired *in-situ* at least during the preparation of the endotherapeutic treatment.

To the first set of data belong at least:

- data about the species of the plant;
- data about the state of health of the plant;
- data about the number of years since the last pruning;
- data about the characteristics of the plant (which can comprise at least: circumference of the trunk and height of the plant, number of branches of the plant, as well as data about the endogenous state of the plant, such as temperature and lymphatic pressure);
- data about at least a formulation able to be administered to the plant;
- geographical data of the plant (comprising at least its nation of belonging as well as latitude and longitude);
- address of the plant.

To the second set of data belong at least:

- local climatic data of the plant (comprising at least ambient temperature, relative humidity, luminous irradiation);
- data about the characteristics of the plant;
- pedological conditions of the soil (including at least texture, pH, local composition of the soil, as well as water balance).

To obtain at least part of the second set of data (*in situ* data), it is advantageous for the device to comprise auxiliary sensors (SA), connected at least to a first data input/output port, in correspondence with at least an input/output peripheral (I/O) connected to the central processing unit (CPU). These auxiliary sensors can be slaved to peripheral detection units tasked with sending the signals to the input/output peripheral (I/O).

Given that the state of the plant comprises at least its health condition and number of years since its last pruning, said first sub-procedure for computing the formulation dose (VDOS(K)) provides for at least a computation according to the following formula:

$$VDOS(K)'DB*FC*Z*SF*AP,$$

where:

DB is the value of a base dose of concentrated formulation, evaluated as cc of formulation every 10 cm of trunk circumference measured at a height of 1m from the ground;

FC is a trunk circumference factor, identified as the measurement of the length of the circumference divided by 10 and correlating the dimensions of the plant to the dose to be administered;

Z is the volume of formulation, every 10 cm of trunk circumference, per unit of base dose of concentrated formulation;

SF is a coefficient related to the health conditions of the plant;

AP is a coefficient related to the number of years since the last pruning.

If the computation procedure necessarily calls for the use both of *ex-situ* data and of updated *in-situ* data, the first computation sub-procedure is advantageously followed by the execution of a second sub-procedure for computing the formulation dose, which applies dosage correction terms, due to the subsequent measurement of required data. The sub-procedure provides for the use of the following formula:

$$VDOS(K)'VDOSt(K)+VDOSt(K)*FM+VDOSt(K)*FE+VDOSt(K)*FP,$$

where:

VDOSt(K) is the value of the dose already computed from the first procedure; FM, FE and FP are algebraic factors relating, respectively, to microclimate, endogenous state of the plant and pedological conditions.

It is interesting to observe that every parameter, value and data item relating to the computation of the dose (VDOS(K)) to be administered can be referred to and are characteristic of the national geographic area to which the plant belongs, said data being readable from a memory accessible from the central processing unit.

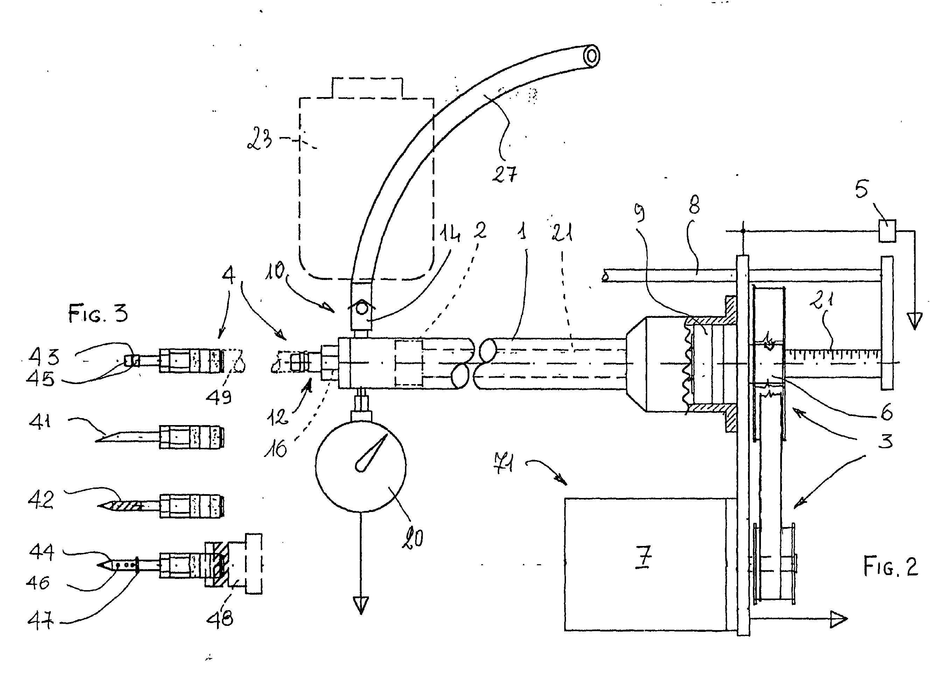

In the solution shown in Figure 2, the means (3) for actuating the motion of the piston (2) comprise:

- a stem (21) of the piston (2) shaped as a worm screw;
- a nut screw (6) engaged on the stem (21), coaxial to the cylinder (1), and free to rotate relative to the cylinder (1) itself, being engaged in a bearing (9) integral with the cylinder (1);
- at least a motor (7) (for instance a stepping electric motor (71)), for rotating the nut screw (6) relative to the cylinder (1) and transmit a rotation-translation motion to the stem (21) to translate the piston (2);
- at least an element (8) for guiding the movement of the stem (21) relative to the cylinder (1).

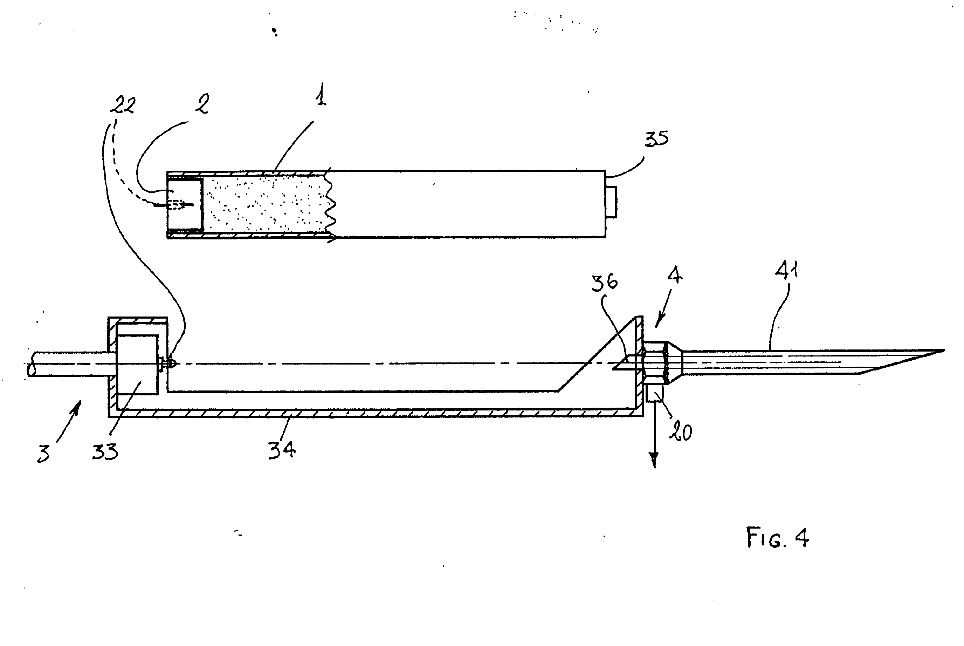

Note that, as shown in Figure 4, the cylinder (1) is removable, being sustained by a semi-open frame (34), able easily to allow both the placement and the removal of the cylinder (1). During the placement, the front end (35) of the cylinder can be engaged in a pin (36) to allow access to the product inside the cylinder. It is thereby possible to replace the cylinder in use with another cylinder of different diameter, to vary the maximum quantity of formulation able to be contained in the cylinder (1) itself. In this case, the means (3) for actuating the motion of the piston (2) comprise means (22) for rapid coupling with the piston (2), in order easily to associate to the actuator means (3) cylinders (1) having different sections with pistons (2) having different diameters while allowing the piston (2) to perform a reciprocating motion, useful when refilling the cylinder.

Alternatively, the cylinder (1) is disposable once the formulation contained therein is depleted. In this case, the piston (2), integral with the cylinder, is actuated by the actuator means (3) with only a thruster (33), which can be stem, not attached to the piston (2).

The cylinder (1) generally comprises an inlet (10) for the formulation and an outlet (12) of the formulation towards the needle (41, 42, 43, 44), with corresponding one-way valves (14, 16), one (14) for supplying the formulation, the other one (16) for injecting the formulation, mutually opposed.

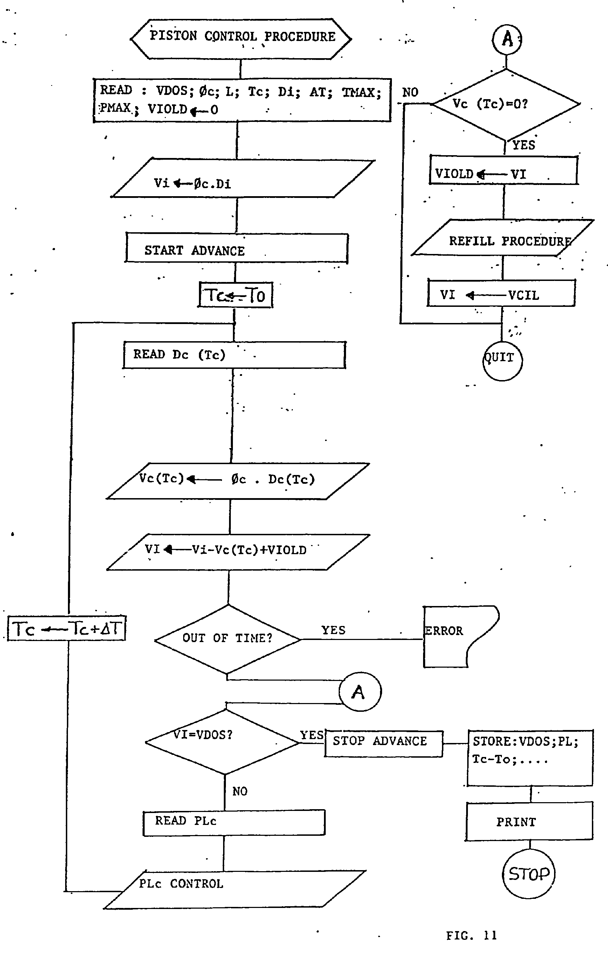

So far, the description has dealt with "single-chamber" cylinders. For these and when it is knuwn with certainty that the formulation contained in the cylinder (1) is sufficient for at least a dose (VDOS), a procedure is provided to control the means (3) for actuating the motion of the piston (2) in the cylinder (1), shown in Figure 11 and which initially, in principle, comprises at least:

- a reading of the dose (VDOS) of formulation to be administered computed from the determination procedure;
- a detection of the initial position (Di) of the piston (2) through a reading of the signal of the displacement sensor (5);
- a computation of an initial volume (Vi) of the phytotherapeutic formulation contained in the cylinder (1), based on the initial position (Di) of the piston (2) and on the area (fc) of a section of the cylinder (1);
  and, in succession:
- an instruction to activate the means (3) for actuating the motion of the piston (2), to move the piston (2) and inject the phytotherapeutic formulation into the plant, as well as a sequence of instructions for the control of the injection, cyclically repeated during the motion of the piston (2) if the injected volume (VI) of phytotherapeutic formulation is less than the dose (VDOS) to be administered, the sequence of instructions for controlling the injection comprising, in succession:
- detection of a current position (Dc(Tc)) of the piston (2) by reading the signal of the displacement sensor (5);
- computation of a current volume (Vc(Tc)) of phytotherapeutic formulation currently present in the cylinder (1) based on the current position (Dc(Tc)) of the piston (2) and on the area (fc) of the section of the cylinder (1);
- computation of the injected volume (VI) of phytotherapeutic formulation from the difference between initial volume (Vi) and current volume (Vc(Tc));
- comparison between the injected volume (VI) and the dose (VDOS) to be administered to verify whether the dose (VDOS) has been reached and, if the injected volume (VI) of formulation is at least equal to the dose (VDOS) of formulation to be administered and the dose (VDOS) has therefore been reached, the call up of a command for stopping the advance of the piston (2).

If instead there is no certainty that the volume of formulation contained in the cylinder, in the state in which it is, is sufficient for a dose (VDOS) or if one desires in any case to deplete any remaining formulation in the cylinder and/or inject several times the volume of formulation corresponding to the maximum capacity of the cylinder, the procedure for controlling the means (3) for actuating the motion of the piston (2) in the cylinder (1) initially further comprises an instruction for resetting to zero a service variable (VIOLD), the sequence of instructions for controlling the injection further comprising, in succession, following the computation of the injected volume (VI) of phytotherapeutic formulation:

- increasing the injected volume (VI) of phytotherapeutic formulation by the value of the service variable (VIOLD);
- verifying the value of the current volume (Vc(Tc)) and, if the current volume (Vc(Tc)) is substantially nil, executing a procedure for refilling the cylinder (1), updating the value of the service variable (VIOLD) to the value of the volume (VI) injected so far, as well as the value of the initial volume (Vi) to the value of the volume of the cylinder (VCIL) and returning to the sequence of instructions for controlling the injection before comparison of the injected volume (VI) with the dose (VDOS) to be administered. The refilling procedure can consist:
- of the manual replacement of the depleted cylinder;
- of returning formulation through the inlet (10), by automatic aspiration due to the inversion of the motion of the piston (2).

In particular, the device comprises at least a removable tank (23) of formulation connectable to the cylinder (1) by means of at least a one-way valve. The tank (23) can also be subdivided at least in a first and a second container (24, 25), containing respectively a concentrated formulation and a solvent and mutually connected by a mixing valve (26) located upstream of the connection to the cylinder (1). Moreover, advantageously, the tank (23) can be remote and connected to the cylinder (1) at least by means of a pipe (27). In this case, the tank can be shoulder-carried or fixed to a vehicle. Lastly, as shown in Figure 7, the tank can be mounted directly onto the cylinder (1), for instance with rapid coupling methods, and thus be replaceable, disposable, etc.

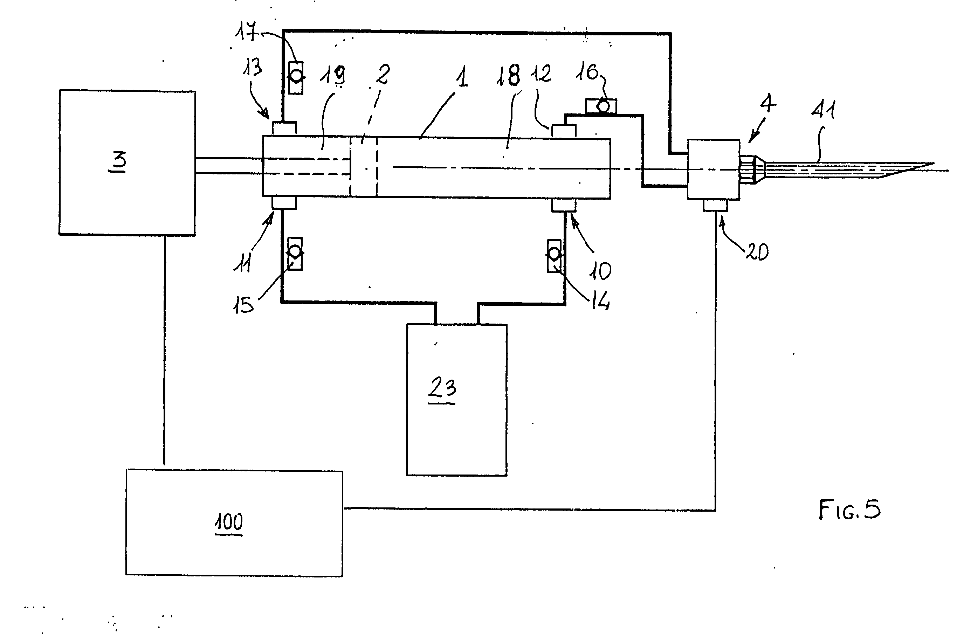

If the capability of providing for the continual injection of formulation is desired, in an embodiment of the invention, shown in Figure 5, the piston (2) divides the cylinder (1) into a first and a second chamber (18, 19).

They are respectively provided, each, with a first and a second inlet (10, 11) of the formulation, fitted with corresponding first and second one-way supply valve (14, 15).

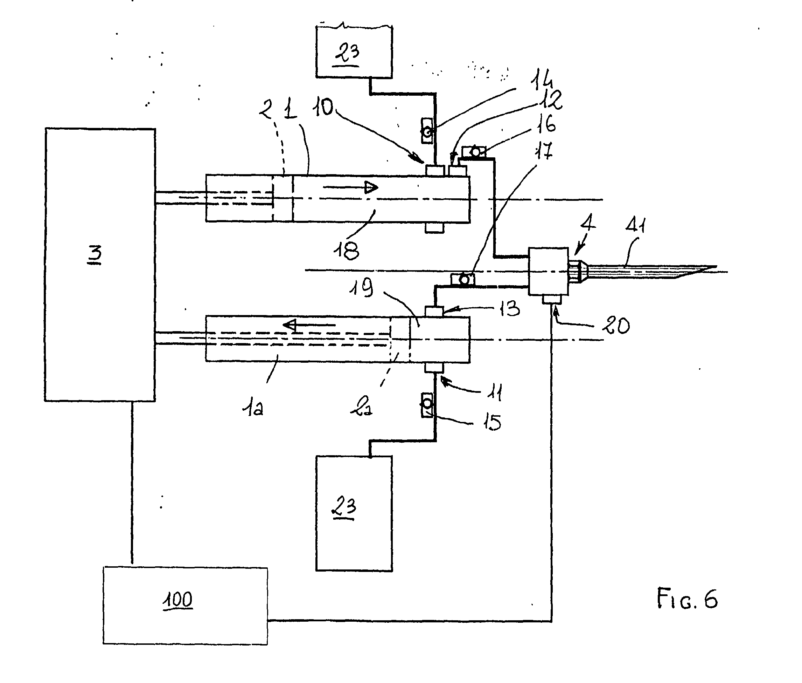

They also comprise a first and a second outlet (12, 13) of the formulation towards the needle (41,42,43,44), provided with corresponding first and second one-way injection valve (16, 17). This is to load the formulation into the second chamber (19) while injecting the formulation into the plant from the first chamber (18), and to load the formulation into the first chamber (18) while injecting the formulation into the plant from the second chamber (19). As an alternative to this solution, it is possible, as shown in Figure 6, to use an auxiliary cylinder (1a) with related auxiliary piston (2a), in parallel and identical to the cylinder (1) operating, in synchronised fashion, in opposition and simultaneously to the piston (2) subject to the action of the actuator means (3).

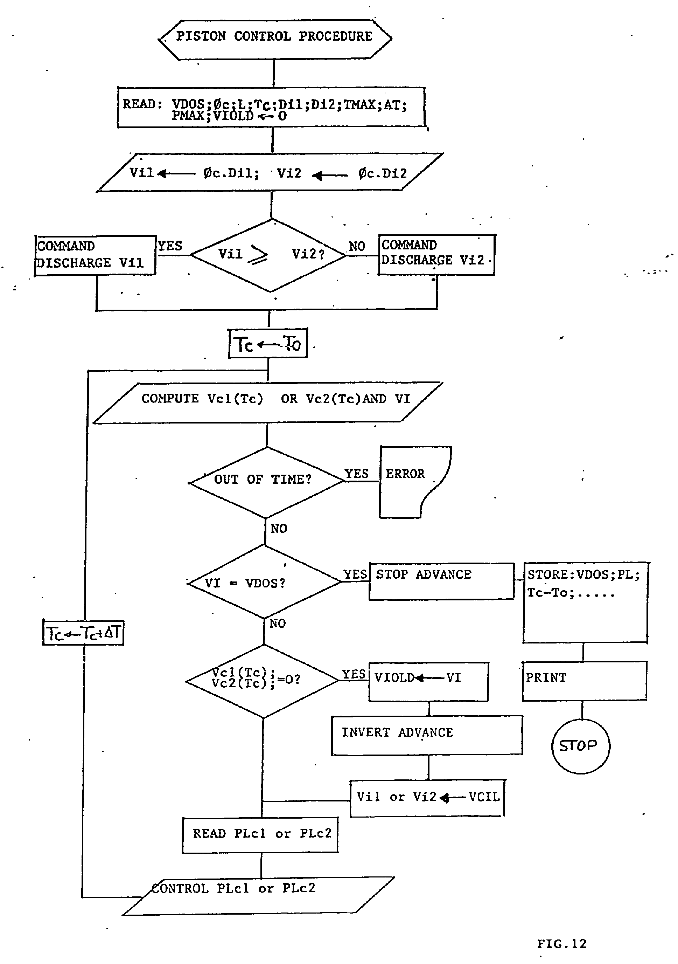

The cylinder (1) and the auxiliary cylinder (1a) thereby define corresponding first and second chamber (18, 19) exactly operating as in the previous case. This allows, for both said solutions, an identical control procedures as specified below and as shown in Figure 12.

In particular, the procedure for the control of the means (3) for actuating the motion of the piston (2, 2a) in the cylinder (1, 1a) initially comprises at least:

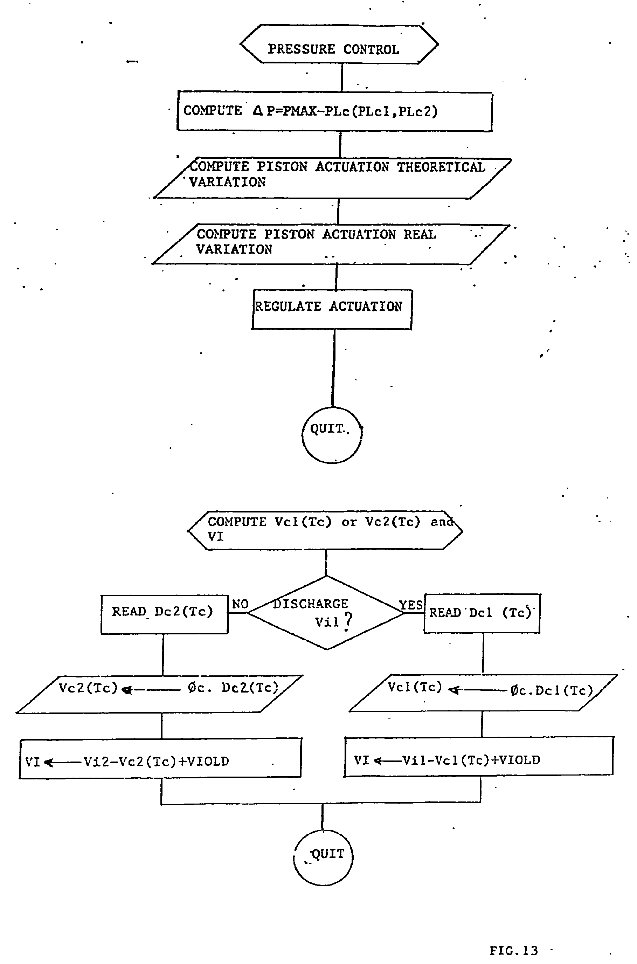

- a reading of the dose (VDOS) of formulation to be administered computed from the determination procedure;
- a detection of the initial position (Di1, Di2) of the piston (2, 2a), by reading the signal of the displacement sensor (5);
- an instruction for setting to zero a service variable (VIOLD);
- a computation of a first and of a second initial volume (Vi1, Vi2) of the phytotherapeutic formulation contained respectively in the first and in the second chamber (18, 19), based on the initial position (Di1, Di2) of the piston (2, 2a) and of the area (fc) of a section of the cylinder (1, 1a);
- a comparison between the first and the second initial volume (Vi1, Vi2) and a transmission, through the output interface (IU), of an instruction to activate the actuator means (3) to initiate the injection of the formulation into the chamber from the more voluminous of the first and the second chamber (18, 19); and further comprises a sequence of injection control instructions, cyclically repeated during the motion of the piston (2, 2a) if the injected volume (VI) of phytotherapeutic formulation is smaller than the dose (VDOS) to be administered, the sequence of injection control instructions comprising, in succession:
- a sub-procedure (see Figure 13, bottom) for computing the values of the current volume (Vc1(Tc), Vc2(Tc)) of the chamber (18, 19) operating the injection and for computing the injected volume (VI) of formulation as the difference between initial volume (Vi1, Vi2) and current volume (Vc1(Tc), Vc2(Tc)) of the chamber (18, 19) operating the injection, the difference being incremented by the value of the service variable (VIOLD);

- comparison between the injected volume (VI) and the dose (VDOS) to be administered to verify whether the dose (VDOS) has been reached and, if the injected volume (VI) of formulation is substantially equal to the dose (VDOS) of formulation to be administered and the dose (VDOS) has therefore been reached, recall to a command for stopping the advance of the piston (2, 2a);

- verification of the value of the current volume (Vc1(Tc), Vc2(Tc)) of the chamber (18,19) operating the injection and, if the current volume (Vc1 (Tc),Vc2(Tc)) is substantially nil, execution of a procedure for inverting the action of the actuator means (3), updating the value of the service variable (VIOLD) to the value of the volume injected (VI) so far, and the value of the initial volume (Vi1, Vi2) of the chamber (18, 19) operating the injection to the value of the volume of the cylinder (VCIL) and returning to the sequence of control instructions.

Obviously also in the case of the "dual chamber" devices illustrated herein, all considerations made about tanks for the case of the "single chamber" devices apply.

It is very important to note that the subject device has at least a pressure sensor (20), connected to the central unit (CPU) through the analogue to digital converter (A/D) and the input interface (II) and having its pressure detection point in correspondence with the means (4) for connecting the needle (41,42,43,44) with the cylinder (1,1a) for measuring an operating pressure (P1c,PLc1,PLc2).

Both in the case of single chamber devices, and in that of dual chamber devices, as shown in Figures 11 and 12, the procedure to control the means (3) for actuating the motion of the piston (2, 2a) in the cylinder (1,1a) initially provides for a reading of a desired value (PMAX) of maximum operating pressure compatible with species, state and characteristics of the plant, with environmental data, and with the formulation to be injected.

The sequence of cyclically repeated instructions provides, after the comparison between injected volume (VI) and dose (VDOS) to be administered, a measurement of the current operating pressure (PLc, PLc1, PLc2) by means of the pressure sensor (20) and the execution of a sub-procedure for controlling and regulating the operating pressure, shown in the upper part of Figure 13.

This sub-procedure evaluates, based on a difference (DP) between the desired value (PMAX) of the maximum operating pressure and the current value of the operating pressure (PLc, PLc1, PLc2), a theoretical variation (VT) to be made to the force applied by the actuator means (3) on the piston (2, 2a) to correct said difference (DP) and imposes, through the output interface (IU), a corresponding real variation (VR) to the force applied by the actuator means (3), to maintain the value of the operating pressure (PLc,PLc1,PLc2) at a predetermined distance from the desired value (PMAX) of the maximum pressure. In this way the integrity of the plant and of its vascular system during the injection can be safeguarded while optimising injection times, because operating pressure is maintained constantly proximate to the maximum safely tolerable value.

Advantageously, the procedure for controlling and regulating the operating pressure maintains the current value of the operating pressure (PLc, PLc1, PLc2) constantly lower than the desired value (PMAX) of the maximum operating pressure, to allow an injection that is not harmful for the plant, avoiding operating pressures that are, even slightly, greater than the maximum tolerable one.

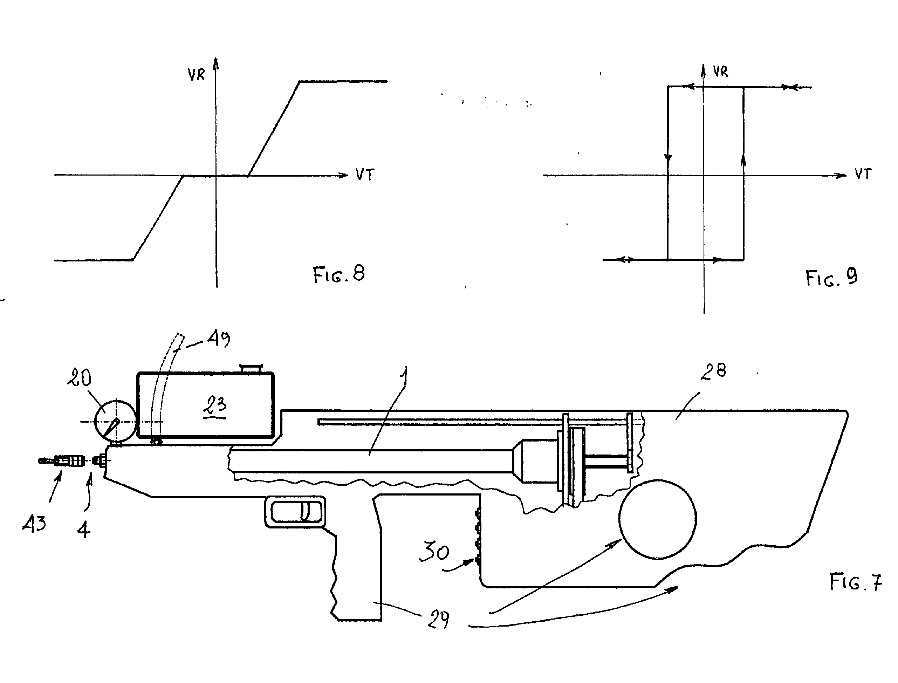

The theoretical variation (VT) can be computed based on a proportional-integral-derivative (PID) algorithm and the real variation (VR) can be correlated to the theoretical variation (VT) of a regulating function that simulates the real behaviour of the actuation means (3). In particular the regulating function can be linear at least in segments and, in this case, it can be a broken line. An example is provided in Figure 8, in which at the sides of a central dead zone (corresponding to small values of difference in (DP), for which it is not very important to correct), there are two linear areas in which it is possible to correct the behaviour of the actuator means (3) with continuity and responding proportionately to the required theoretical variation (VT). At the extremes, the regulating function shown in Figure 8 has constant segments, corresponding to saturation areas of the behaviour of the actuator means (3), in correspondence with which only a constant real variation (VR) can be applied, regardless of the computed theoretical variation (VT). This type of regulating function is particularly suitable in the case of actuator means (3) motorised with motors, for instance electric stepping motors. In this case the sub-procedure for controlling and regulating the operating pressure can impose, through the output interface (IU), the real variation to the force applied by the actuator means (3) by means of a continuous regulation of the velocity of the piston (2, 2a), at least in the linear segments of the regulating function itself.

The regulating function can also have at least a hysteresis in at least a segment (an example of such a type of regulating function is shown in Figure 9). This type of regulating function is particularly suited, for instance to the operation of fluid-dynamic actuator means (3) provided with simple on/off valves and, in general, of systems in which the speed of the piston (2, 2a) cannot be regulated with continuity. In these cases, the sub-procedure for controlling and regulating the operating pressure imposes, through the output interface (IU), the real variation (VR) to the force applied by the actuator means (3) through a succession of temporary stops and restarts of the actuator means (3) themselves.

In this case, given the on/off behaviour of the system, the hysteretic regulating function of the type shown in Figure 9 allows to avoid too many sudden behaviour changes and annoying vibrations or mechanical resonance of the device.

Advantageously, the central processing unit (CPU) comprises a time counter and, both for single chamber devices and for dual chamber devices, as shown in Figures 11 and 12, the procedure to control the means (3) for actuating the motion of the piston (2, 2a) in the cylinder (1, 1a) initially provides for a reading of a desired value of maximum intervention time (TMAX), compatible with safeguarding the device and in any case to control excessively long processes.

After the instruction to start the means (3) for actuating the motion of the piston (2, 2a), the procedure calls for an initialisation (T0) of the time count (Tc) by the time counter; the sequence of instructions then provides for a comparison between the time (Tc) and the maximum intervention time (TMAX) and calls up a sub-procedure for stopping the device if the time interval (Tc) exceeds maximum intervention time (TMAX).

The needle (41) of the device can be normal and appropriately dimensioned. With reference to Figure 3, a needle (42) is externally threaded at least in correspondence with the tip for its screw-on engagement in a hole previously drilled in the trunk of the plant.

Another type of needle (43), at least in correspondence with the tip, externally presents at least two consecutive shaped elements (45), to grip the walls of a hole previously drilled in the trunk of a plant and determine at least a partial seal against the leakage of liquids from the trunk itself.

Yet another type of needle (44) has its tip closed to be inserted into the trunk by hammering, a cap (48) for protecting the needle (44) being provided, with no need for holes previously drilled in the trunk itself, the needle (44) further presenting, for a predetermined segment of its own body successive to the tip, radial openings (46) for injecting the formulation into the plant.

This needle (44) presents, at a predetermined distance from the tip and beyond the radial openings (46), a check element (47) of the trunk of the plant to determine the insertion depth of the needle (44) into the trunk.

It should be noted that the means (4) for connecting the needle (41, 42, 43, 44) and the cylinder (1) can be of the rapid coupling type. Alternatively, the means (4) for connecting the needle (41, 42, 43, 44) and the cylinder (1) comprise at least a flexible conduit (49) provided, at its ends, with attachment means for the cylinder (1) and for the needle (41, 42, 43, 44).

Advantageously, the device can be portable.

A solution of this kind, as shown in Figure 7, provides for the device to be enclosed in a case (28) which comprises gripping means (29) for the operator and control pushbuttons (30) associated to the case (28) and easily reachable by the hands of an operator when the device is in operation.

The invention thus conceived can be subject to numerous modifications and variations, without thereby departing from the scope of the inventive concept that characterises it.

Moreover, all components can be replaced by technically equivalent elements.

In practice all materials employed, as well as dimensions, may be any at all, depending on requirements.

**Claims**

1. A device for arboreal plant endotherapy, of the type comprising a hollow cylinder (1) provided with a piston (2), means (3) for actuating the motion of the piston (2), at least an injection needle (41,42,43,44), means (4) for connecting the needle (41,42,43,44) to the cylinder (1), to inject into the trunk of the plant at least a dose (VDOS(K)) of a phytotherapeutic formulation loaded into the cylinder (1), **characterised in that** it further comprises:

   - at least a central processing unit (CPU), for the automatic, intelligent, computerised control of the device;
   - at least a keyboard (TT) for manually inserting data and for managing the commands to the device, connected to the central unit (CPU);
   - at least an analogue digital converter (A/D) connected to the central unit (CPU) and coupled to at least an input interface (II) for conditioning at least signals coming from a displacement sensor (5) for detecting the position of the piston (2) into the cylinder (1);
   - at least an output interface (IU) interposed between the central processing unit (CPU) and the means (3) for actuating the motion of the piston (2); the central processing unit (CPU) implementing a program that comprises:
   - a procedure for determining the dose (VDOS(K)) of formulation to be administered to a plant;
   - a procedure to control the means (3) for actuating the motion of the piston (2) according to the dose (VDOS (K)) to be administered.

2. A device as claimed in claim 1, **characterised in that** the central processing unit (CPU) comprises at least a first data input/output port, in correspondence with at least an input/output peripheral connected to the central unit (CPU).

**3.** A device as claimed in claim 1 o 2, **characterised in that** the procedure for determining the dose (VDOS(K)) of formulation to be administered to the plant is a cyclical body repeated in sequence as many times as there are plants to be treated.

**4.** A device as claimed in claim 1 o 2 o 3, **characterised in that** the procedure for determining the dose (VDOS(K)) of formulation to be administered to the plant comprises:

- at least a block for reading at least data related to species, state and characteristics of the plant, data related to at least a formulation able to be administered to the plant, as a function of its adversity or prevention thereto, as well as environmental data;
- at least a first sub-procedure for computing the dose (VDOS(K)) of formulation to be administered to the plant as a function of the data read from the reading block.

**5.** A device as claimed in claim 4, **characterised in that** the reading block further comprises detailed geographical data for locating the plant.

**6.** A device as claimed in claim 4 o 5 **characterised in that** the data acquired from the reading block are subdivided into at least a first set of data acquired *ex-situ* prior to a current endotherapeutic treatment of the plant and into a second set of data acquired *in-situ* at least during the preparation of the endotherapeutic treatment.

**7.** A device as claimed in claim 6, **characterised in that** to the first set of data belong at least:

- data about the species of the plant;
- data about the state of health of the plant;
- data about the number of years since the last pruning;
- data about the characteristics of the plant;
- data about at least a formulation able to be administered to the plant;
- geographical data of the plant;
- address of the plant;

to the second set of data belong at least:

- local climatic data of the plant;
- data about the characteristics of the plant;
- pedological conditions of the soil.

**8.** A device as claimed in claim 7, **characterised in that**:

- the characteristics of the plant comprise at least trunk circumference and plant height, number of branches of the plant, as well as data about the endogenous state of the plant;
- the geographical data of the plant comprise at least nation of belonging and latitude and longitude;
- local climatic data comprise at least ambient temperature, relative humidity, luminous irradiation;
- the pedological conditions of the soil comprise at least texture, pH, local soil composition, as well as water balance.

**9.** A device as claimed in any of the claims from 6 to 8, characterised in that it' comprises auxiliary sensors (SA), connected at least to a first data input/output port, in correspondence with at least an input/output peripheral (I/O) connected to the central processing unit (CPU), for measuring at least part of the second set of data.

**10.** A device as claimed in any of the claims from 4 to 6, **characterised in that** the state of the plant comprises at least its health condition and number of years since the last pruning and **in that** the first sub-procedure for computing the dose (VDOS(K)) of formulation provides for a computation according to the following formula:

$$VDOS(K)'DB*FC*Z*SF*AP,$$

where:

DB is the value of a base dose of concentrated formulation, evaluated as cc of formulation every 10 cm of trunk circumference measured at a height of 1m from the ground;
FC is a trunk circumference factor, identified as the measurement of the length of the circumference divided by 10 and correlating the dimensions of the plant to the dose to be administered;
Z is the volume of formulation, every 10 cm of trunk circumference, per unit of base dose of concentrated formulation;
SF is a coefficient related to the health conditions of the plant;
AP is a coefficient related to the number of years since the last pruning.

**11.** A device as claimed in any of the claims from 7 to 9, **characterised in that**:

- the state of the plant comprises at least its health condition and number of years since the last pruning;
- the first sub-procedure for computing the dose of formulation provides for a computation according to the following formula:

$$VDOSt(K)'DB*FC*Z*SF*A\dot{P}, \iota$$

where:

VDOSt(K) indicates a preliminary dosage value;
DB is the value of a base dose of concentrated formulation, evaluated as cc of formulation every 10 cm of trunk circumference measured at a height of 1m from the ground;
FC is a trunk circumference factor, identified as the measurement of the length of the circumference divided by 10 and correlating the dimensions of the plant to the dose to be administered;
Z is the volume of formulation, every 10 cm of trunk circumference, per unit of base dose of concentrated formulation;
SF is a coefficient related to the health conditions of the plant;
AP is a coefficient related to the number of years since the last pruning; the first computation sub-procedure being followed by the execution of a second sub-procedure for computing the dose of formulation, which applies terms for correcting the dosage at least according to the following formula:

$$VDOS(K)'VDOSt(K)\dotplus VDOSt(K)*FM+VDOSt(K)*FE+VDOSt(K)*FP, \imath$$

where: FM, FE and FP are algebraic factors relating, respectively, to microclimate, endogenous state of the plant and pedological conditions.

**12.** A device as claimed in claim 10 or 11, **characterised in that** every parameter, value and data item relating to the computation of the dose (VDOS(K)) to be administered can be referred to and are characteristic of the national geographic area to which the plant belongs, said data being readable from a memory accessible from the central processing unit.

**13.** A device as claimed in any of the previous claims, **characterised in that** the means (3) for actuating the motion of the piston (2) comprise:

- a stem (21) of the piston (2) shaped as a worm screw;
- a nut screw (6) engaged on the stem (21), coaxial to the cylinder (1), and free to rotate relative to the cylinder (1) itself;
- at least a motor (7) for rotating the nut screw (6) relative to the cylinder (1) and transmit a rotation-translation motion to the stem (21) to translate the piston (2);
- at least an element (8) for guiding the movement of the stem (21) relative to the cylinder (1).

**14.** A device as claimed in any of the previous claims, **characterised in that** the means (3) for actuating the motion of the piston comprise at least a stepping motor (71).

**15.** A device as claimed in any of the previous claims, **characterised in that** the cylinder is removable.

**16.** A device as claimed in claim 15, **characterised in that** the cylinder (1) is disposable once the formulation contained therein is depleted.

**17.** A device as claimed in claim 15, **characterised in that** the means (3) for actuating the motion of the piston (2) comprise means (22) for rapid coupling with the piston (2), in order to associate to the actuator means (3) cylinders (1) having different sections with pistons (2) having different diameters while allowing the piston (2) to perform a reciprocating motion.

**18.** A device as claimed in any of the previous claims, **characterised in that** the cylinder (1) comprises an inlet (10) for the formulation and an outlet (12) of the formulation towards the needle (41, 42, 43, 44), with corresponding one-way valves (14, 16), one (14) for supplying the formulation, the other one (16) for injecting the formulation, mutually opposed.

**19.** A device as claimed in any of the previous claims, **characterised in that** the procedure for controlling the means (3) for actuating the motion of the piston (2) in the cylinder (1) initially comprises at least:

- a reading of the dose (VDOS) of formulation to be administered computed from the determination procedure;
- a detection of the initial position (Di) of the piston (2) through a reading of the signal of the displacement sensor (5);
- a computation of an initial volume (Vi) of the phytotherapeutic formulation contained in the cylinder (1), based on the initial position (Di) of the piston (2) and on the area (fc) of a section of the cylinder (1);

and, in succession:

- an instruction to activate the means (3) for actuating the motion of the piston (2), to move the piston (2) and inject the phytotherapeutic formulation into the plant, as well as a sequence of instructions for the control of the injection, cyclically repeated during the motion of the piston (2) if the injected volume (VI) of phytotherapeutic formulation is less than the dose (VDOS) to be administered, the sequence of instructions for controlling the injection comprising, in succession:
- detection of a current position (Dc(Tc)) of the piston (2) by reading the signal of the displacement sensor (5);
- computation of a current volume (Vc(Tc)) of phytotherapeutic formulation currently present in the cylinder (1) based on the current position (Dc(Tc)) of the piston (2) and on the area (fc) of the section of the cylinder (1);
- computation of the injected volume (VI) of phytotherapeutic formulation from the difference between initial volume (Vi) and current volume (Vc(Tc));
- comparison between the injected volume (VI) and the dose (VDOS) to be administered to verify whether the dose (VDOS) has been reached and, if the injected volume (VI) of formulation is at least equal to the dose (VDOS) of formulation to be administered and the dose (VDOS) has therefore been reached, the call up of a command for stopping the advance of the piston (2).

**20.** A device as claimed in claim 19, **characterised in that** the procedure for controlling the means (3) for actuating the motion of the piston (2) in the cylinder (1) initially further comprises an instruction for resetting to zero a service variable (VIOLD), the sequence of instructions for controlling the injection further comprising, in succession, following the computation of the injected volume (VI) of phytotherapeutic formulation:

- increasing the injected volume (VI) of phytotherapeutic formulation by the value of the service variable (VIOLD);
- verifying the value of the current volume (Vc(Tc)) and, if the current volume (Vc(Tc)) is substantially nil, executing a procedure for refilling the cylinder (1), updating the value of the service variable (VIOLD) to the value of the volume (VI) injected so far, as well as the value of the initial volume (Vi) to the value of the volume of the cylinder (VCIL) and returning to the sequence of instructions for controlling the injection before comparison of the injected volume (VI) with the dose (VDOS) to be administered.

**21.** A device as claimed in any of the claims from 1 to 15, **characterised in that** the piston (2) divides the cylinder (1) into a first and a second chamber (18, 19) each provided, respectively, with a first and a second inlet (10, 11) of the formulation provided with corresponding first and second one-way supply valve (14, 15), as well as with a first and a second outlet (12, 13) of the formulation towards the needle (41, 42, 43, 44) provided with corresponding first and second one-way injection valve (16, 17), the first and the second one-way supply valve (14, 15) acting in opposition to each other and, respectively, to the corresponding first and second injection one-way valve (16, 17), to load the formulation in the second chamber (19) whilst injecting the formulation into the plant from the first chamber (18); as well as to load the formulation in the first chamber (18) whilst injecting the formulation into the plant from the second chamber (19).

22. A device as claimed in any of the claims from 1 to 15, **characterised in that** it comprises an auxiliary cylinder (1a), in parallel and identical to the cylinder (1), fitted with related auxiliary piston (2a), operating, in synchronised fashion, in opposition and simultaneously to the piston (2) subject to the action of the actuator means (3), the cylinder (1) and the auxiliary cylinder (1a) defining corresponding first and second chamber (18, 19), each provided, respectively, with a first and a second inlet (10, 11) of the formulation fitted with corresponding first and second one-way supply valve (14, 15), as well as a first and a second outlet (12, 13) of the formulation towards the needle (41,42,43, 44) fitted with corresponding first and second one-way injection valve (16, 17), the first and the second one-way supply valve (14, 15) acting in mutual opposition and, respectively, in opposition to the corresponding first and second one-way injection valve (16, 17), to load the formulation into the second chamber (19) whilst injecting the formulation into the plant from the first chamber (18), as well as to load the formulation in the first chamber (18) whilst injecting the formulation into the plant from the second chamber (19).

23. A device as claimed in claim 21 or 22, **characterised in that** the procedure for controlling the means (3) for actuating the motion of the piston (2, 2a) in the cylinder (1, 1a) initially comprises at least:

- a reading of the dose (VDOS) of formulation to be administered computed from the determination procedure;
- a detection of the initial position (Di) of the piston (2, 2a) through a reading of the signal of the displacement sensor (5);
- a computation of an initial volume (Vi) of the phytotherapeutic formulation contained in the cylinder (1, 1a), based on the initial position (Di) of the piston (2, 2a) and on the area (fc) of a section of the cylinder (1, 1a);
- an instruction to set to zero a service variable (VIOLD);
- a computation of a first and of a second initial volume (Vi1, Vi2) of the phytotherapeutic formulation contained respectively in the first and in the second chamber (18, 19), based on the initial position (Di1, Di2) of the piston (2, 2a) and of the area (fc) of a section of the cylinder (1, 1a);
- a comparison between the first and the second initial volume (Vi1, Vi2) and a transmission, through the output interface (IU), of an instruction to activate the actuator means (3) to initiate the injection of the formulation into the chamber from the more voluminous of the first and the second chamber (18, 19);

and further comprises a sequence of injection control instructions, cyclically repeated during the motion of the piston (2, 2a) if the injected volume (VI) of phytotherapeutic formulation is smaller than the dose (VDOS) to be administered, the sequence of injection control instructions comprising, in succession:

- a sub-procedure (see Figure 13, bottom) for computing the values of the current volume (Vc1(Tc), Vc2(Tc)) of the chamber (18, 19) operating the injection and for computing the injected volume (VI) of formulation as the difference between initial volume (Vi1, Vi2) and current volume (Vc1 (Tc), Vc2(Tc)) of the chamber (18, 19) operating the injection, the difference being incremented by the value of the service variable (VIOLD);
- comparison between the injected volume (VI) and the dose (VDOS) to be administered to verify whether the dose (VDOS) has been reached and, if the injected volume (VI) of formulation is substantially equal to the dose (VDOS) of formulation to be administered and the dose (VDOS) has therefore been reached, recall to a command for stopping the advance of the piston (2, 2a);
- verification of the value of the current volume (Vc1(Tc),Vc2(Tc)) of the chamber (18,19) operating the injection and, if the current volume (Vc1 (Tc),Vc2(Tc)) is substantially nil, execution of a procedure for inverting the action of the actuator means (3), updating the value of the service variable (VIOLD) to the value bf the volume injected (VI) so far, and the value of the initial volume (Vi1, Vi2) of the chamber (18, 19) operating the injection to the value of the volume of the cylinder (VCIL) and returning to the sequence of control instructions.

24. A device as claimed in claim 19 or 20 or 23, **characterised in that**:

- it comprises at least a pressure sensor, connected to the central unit (CPU) through the analogue digital converter (A/D) and the input interface (II) and having its pressure detection point in correspondence with the means (4) for connecting the needle (41, 42, 43, 44) to the cylinder (1, 1a) for measuring an operating pressure (PLc, PLc1, PLc2);
- the procedure to control the means (3) for actuating the motion of the piston (2, 2a) in the cylinder (1, 1a) initially provides for a reading of the desired value (PMAX) of maximum operating pressure compatible with the species, state and characteristics of the plant, with environmental data, and with the formulation to be injected;
- the sequence of cyclically repeated instructions provides, after the comparison between the injected volume (VI) and the dose to be administered (VDOS), a measurement of current operating pressure (PLc, PLc1, PLc2) by means of the pressure sensor (20) and the execution of a sub-procedure for controlling and regulating the operating pressure which evaluates, based on a difference (DP) between the desired value of the maximum operating pressure (PMAX) and the current value of the operating pressure (PLc, PLc1, PLc2), a theoretical variation (VT) to be made to the force applied by the actuator means (3) on the piston (2, 2a) to correct said difference (DP) and imposes, through the output interface (IU), a corresponding real variation (VR) to the force applied by the actuator means (3), to maintain the value of the operating pressure (PLc, PLc1, PLc2) to a predetermined distance from the desired value (PMAX) of the maximum pressure.

25. A device as claimed in claim 24, **characterised in that** the procedure for controlling and regulating the operating pressure maintains the current value of the operating pressure (PLc, PLc 1, PLc2) constantly lower than the desired value of the maximum operating pressure (PMAX).

26. A device as claimed in claim 24 or 25, **characterised in that** the theoretical variation (VT) is computed based on a proportional-integral-derivative (PID) algorithm and **in that** the real variation (VR) is correlated to the theoretical variation (VT) of a regulating function that simulates the real behaviour of the actuation means (3).

27. A device as claimed in claim 26, **characterised in that** the regulating function is linear at least in segments.

28. A device as claimed in claim 27, **characterised in that** the regulating function is a broken line.

29. A device as claimed in claim 27 or 28, **characterised in that** the regulating function ha at least a hysteresis in at least a segment.

30. A device as claimed in any of the claims from 24 to 29, **characterised in that** the sub-procedure for controlling and regulating the operating pressure imposes, through the output interface (IU), the real variation (VR) to the force applied by the actuator means (3) through a succession of temporary stops and restarts of the actuator means (3) themselves.

31. A device as claimed in any of the claims from 24 to 29, **characterised in that** the sub-procedure for controlling and regulating the operating pressure imposes, through the output interface (IU), the real variation (VR) to the force applied by the actuator means (3) by means of a continuous adjustment of the speed of the piston (2, 2a).

32. A device as claimed in claim 19 or 20 or 23, **characterised in that**:

- the central processing unit (CPU) comprises a time counter;
- the procedure to control the means (3) for actuating the motion of the piston (2,2a) in the cylinder (1,1a) initially calls for a reading of a desired value of maximum intervention time (TMAX);
- the procedure for controlling the means (3) for actuating the motion of the piston (2,2a) in the cylinder (1,1a) provides, subsequent to the instruction to start the means (3) for actuating the motion of the piston (2,2a), an initialisation (TO) of the time count (Tc) by the time counter;

the sequence of instructions providing for a comparison of the time (Tc) with the maximum intervention time (TMAX) and calling up a sub-procedure for stopping the device if the time interval (Tc) exceeds the maximum intervention time (TMAX).

33. A device as claimed in any of the previous claims **characterised in that** the needle (42) is externally threaded at least in correspondence with the tip for the screw-in engagement into a hole previously obtained in the trunk of the plant.

34. A device as claimed in any of the claims from 1 to 33 **characterised in that** the needle (43), at least in correspondence with the tip, externally presents at least two consecutive shaped elements (45), for gripping the walls of a hole previously obtained in the trunk of the plant and determine at least a partial seal against the leakage of liquids from the trunk itself.

**35.** A device as claimed in any of the claims from 1 to 33 **characterised in that** the needle (44) has is tip closed to be able to be inserted into the trunk by hammering, a cap (48) being provided for protecting the needle (44), with no need for holes previously obtained in the trunk itself, the needle (44) further presenting, for a predetermined segment of its own body successive to the tip, radial openings (46) for injecting the formulation into the plant.

**36.** A device as claimed in claim 35, **characterised in that** the needle (44) presents, at a predetermined distance from the tip and beyond the radial openings (46) and element (47) for checking the trunk of the plant to determine the insertion depth of the needle (44) into the trunk.

**37.** A device as claimed in any of the previous claims, **characterised in that** the connection means (4) between the needle (41, 42, 43, 44) and the cylinder (1) provide for rapid coupling.

**38.** A device as claimed in any of the previous claims, **characterised in that** connection means (4) between the needle (41, 42, 43, 44) and the cylinder (1) comprise at least a flexible conduit (49) provided, at its ends, with attachment means for the cylinder (1) and for the needle (41, 42, 43, 44).

**39.** A device as claimed in any of the previous claims, **characterised in that** it comprises at least a tank (23) of formulation removably connectable to the cylinder (1) through at least a one-way valve.

**40.** A device as claimed in claim 39, **characterised in that** the tank (23) is subdivided into at least a first and a second container (24, 25), containing respectively a concentrated formulation and a solvent and mutually connected by a mixing valve (26) located upstream of the connection to the cylinder (1).

**41.** A device as claimed in claim 39 or 40, **characterised in that** the tank (23) is remote and connected to the cylinder (1) at least through a pipe (27).

**42.** A device as claimed in any of the previous claims **characterised in that** it is portable.

**43.** A device as claimed in claim 42, **characterised in that** it is enclosed in a case (28) which comprises gripping means (29) for the operator and control pushbuttons (30) associated to the case (28) and easily reachable by the hands of an operator when the device is in operation.

**Patentansprüche**

**1.** Vorrichtung zur endotherapeutischen Behandlung von Bäumen, vom Typ enthaltend einen hohlen Zylinder (1), versehen mit einem Kolben (2), Mitteln (3) zum Antreiben der Bewegung des Kolbens (2), wenigstens eine Injektionsnadel (41, 42, 43, 44), Mittel (4) zum Anschliessen der Nadel (41, 42, 43, 44) an den Zylinder (1), um in den Stamm des Baumes wenigstens eine Dosis (VDOS(K)) einer phytotherapeutischen Lösung zu injizieren, die in den Zylinder (1) geladen ist, **dadurch gekennzeichnet, dass** sie ausserdem enthält:

- wenigstens eine zentrale Verarbeitungseinheit (CPU) zur automatischen, intelligenten, computerisierten Steuerung der Vorrichtung;
- wenigstens eine Tastatur (TT) zur manuellen Eingabe von Daten und zum Verwalten der Befehle an die Vorrichtung, welche an die zentrale Einheit (CPU) angeschlossen ist;
- wenigstens einen Analog-Digital-Umwandler (A/D), angeschlossen an die zentrale Einheit (CPU) und verbunden mit wenigstens einer Eingangs-Schnittstelle (II) zum Konditionieren wenigstens der von einem Verschiebungsfühler (5) kommenden Signale zum Erfassen der Position des Kolbens (2) in dem Zylinder (1);
- wenigstens eine Ausgangs-Schnittstelle (IU), die sich zwischen der zentralen Verarbeitungseinheit (CPU) und den Mitteln (3) zum Antreiben der Bewegung des Kolbens (2) befindet; wobei die zentrale Verarbeitungseinheit (CPU) ein Programm einbezieht, das wie folgt umfasst:
- ein Verfahren zum Bestimmen der Dosis (VDOS(K)) der Lösung, die einem Baum verabreicht werden soll;
- ein Verfahren zum Steuern der Mittel (3) zum Antreiben der Bewegung des Kolbens (2), und zwar je nach der Dosis (VDOS(K)). die verabreicht werden soll.

**2.** Vorrichtung nach Patentanspruch 1, **dadurch gekennzeichnet, dass** die zentrale Verarbeitungseinheit (CPU) wenigstens ein erstes Eingangs-/Ausgangsport für Daten enthält, und zwar entsprechend wenigstens einem peripherischen Eingang/Ausgang, angeschlossen an die zentrale Einheit (CPU).

3. Vorrichtung nach Patentanspruch 1 oder 2, **dadurch gekennzeichnet, dass** das Verfahren zum Bestimmen der dem Baum zu verabreichenden Dosis (VDOS(K)) der Lösung ein zyklischer Körper ist, wiederholt so viele Male wie Bäume zu behandeln sind.

4. Vorrichtung nach Patentanspruch 1 oder 2 oder 3, **dadurch gekennzeichnet, dass** das Verfahren zum Bestimmen der dem Baum zu verabreichenden Dosis (VDOS (K)) der Lösung wie folgt enthält:

   - wenigstens einen Block zum Ablesen von wenigstens der Daten, die auf die Spezies, den Zustand und die Eigenschaften des Baumes bezogen sind, Daten betreffend wenigstens eine Lösung, die dem Baum verabreicht werden kann, in Funktion ihrer Bekämpfungs- oder Verhinderungsaufgabe, sowie sich auf die Umwelt beziehende Daten;
   - wenigstens ein erstes Unterverfahren zum Berechnen der Dosis (VDOS(K)) der Lösung, die dem Baum in Funktion der von dem Ableseblock abgelesenen Daten verabreicht werden soll.

5. Vorrichtung nach Patentanspruch 4, **dadurch gekennzeichnet, dass** der Ableseblock ausserdem detaillierte geografische Daten zum Lokalisieren des Baumes enthält.

6. Vorrichtung nach Patentanspruch 4 oder 5, **dadurch gekennzeichnet, dass** die von dem Ableseblock übemommenen Daten wenigstens in einen ersten Datensatz, übernommen *ex-situ* vor einer laufenden endotherapeutischen Behandlung des Baumes, und in einen zweiten Datensatz unterteilt sind, übernommen *in-situ* wenigstens während der Vorbereitung der endotherapeutischen Behandlung.

7. Vorrichtung nach Patentanspruch 6, **dadurch gekennzeichnet, dass** zu dem ersten Datensatz wenigstens wie folgt gehört:

   - Daten betreffend die Spezies des Baumes;
   - Daten betreffend den Gesundheitszustand des Baumes;
   - Daten betreffend die Jahre seit dem letzten Auslichten;
   - Daten betreffend die Eigenschaften des Baumes;
   - Daten betreffend wenigstens eine Lösung, die dem Baum verabreicht werden kann;
   - geografische Daten des Baumes;
   - Adresse des Baumes;

   und zu dem zweiten Datensatz wenigstens wie folgt gehört :

   - örtliche klimatische Daten des Baumes;
   - Daten betreffend die Eigenschaften des Baumes;
   - pedologische Bedingungen des Bodens.

8. Vorrichtung nach Patentanspruch 7, **dadurch gekennzeichnet, dass**:

   - die Eigenschaften des Baumes wenigstens den Umfang des Stammes, die Höhe des Baumes, die Zahl der Äste des Baumes enthalten, wie auch die Daten betreffend den endogenen Zustand des Baumes;
   - die geografischen Daten des Baumes wenigstens die Zugehörigkeitsnation sowie Breiten- und Längengrad enthalten;
   - die örtlichen klimatischen Daten wenigstens die Umwelttemperatur enthalten, bezogen auf Feuchtigkeit, Lichtbestrahlung;
   - die pedologischen Bedingungen des Bodens wenigstens die Struktur, den pH-Wert, die örtliche Bodenzusammensetzung und das Wassergleichgewicht enthalten.

9. Vorrichtung nach einem beliebigen der Patentansprüche von 6 bis 8, **dadurch gekennzeichnet, dass** sie Hilfsfühler (SA) enthält, angeschlossen an wenigstens ein erstes Eingangs-/Ausgangsport für Daten, und zwar entsprechend wenigstens einem peripherischen Eingang/Ausgang (I/O), der an die zentrale Verarbeitungseinheit (CPU) zum Messen von wenigstens einem Teil des zweiten Datensatzes angeschlossen.

10. Vorrichtung nach einem beliebigen der Patentansprüche von 4 bis 6, **dadurch gekennzeichnet, dass** der Zustand des Baumes wenigstens seinen Gesundheitszustand und die Zahl von Jahren enthält, die seit dem letzten Auslichten vergangen sind, und dass das erste Unterverfahren zum Berechnen der Dosis (VDOS(K)) der Lösung eine Berechnung nach der folgenden Formel vorsieht:

$$(VDOS(K)'DB*FC*Z*SF*AP,$$

wo:

DB der Wert einer G runddosierung einer konzentrierten Lösung ist, bewertet als $cm^3$ der Lösung für jede 10 cm des Stammumfanges, gemessen auf einer Höhe von 1 m vom Boden;
FC ist ein Umfangsfaktor des Stammes ist, identifiziert als Abmessung der Länge des Umfanges, geteilt durch 10, und die Abmessungen des Baumes auf die zu verabreichende Dosis beziehend;
Z ist das Volumen der Lösung, alle 10 cm des Stammumfanges, pro Einheit der Grunddosierung der konzentrierten Lösung;
SF ist ein Koeffizient, bezogen auf den Gesundheitszustand des Baumes;
AP ist ein Koeffizient, bezogen auf die Zahl der Jahre seit dem letzten Auslichten.

**11.** Vorrichtung nach einem beliebigen der Patentansprüche von 7 bis 9, **dadurch gekennzeichnet, dass**

- der Zustand des Baumes wenigstens seinen Gesundheitszustand und die Zahl der Jahre seit dem letzten Auslichten enthält;

das erste Unterverfahren zum Berechnen der Dosis der Lösung eine Berechnung nach der folgenden Formel vorsieht:

$$(VDOS(K)'DB*FC*Z*SF*AP,$$

wo:

VDOSt(K) einen vorbereitenden Dosierwert bezeichnet;
DB der Wert einer G runddosierung einer konzentrierten Lösung ist, bewertet als $cm^3$ der Lösung für jede 10 cm des Stammumfanges, gemessen auf einer Höhe von 1 m vom Boden;
FC ist ein Umfangsfaktor des Stammes, identifiziert als Abmessung der Länge des Umfanges, geteilt durch 10, und die Abmessungen des Baumes auf die zu verabreichende Dosis beziehend;
Z ist das Volumen der Lösung, alle 10 cm des Stammumfanges, pro Einheit der Grunddosierung der konzentrierten Lösung;
SF ist ein Koeffizient, bezogen auf den Gesundheitszustand des Baumes;
AP ist ein Koeffizient, bezogen auf die Zahl der Jahre seit dem letzten Auslichten;
wobei die erste Berechnung des Unterverfahrens von der Durchführung eines zweiten Unterverfahrens zum Berechnen der Dosierung der Lösung gefolgt ist, welche die Kriterien zur Korrektur der Dosierung wenigstens nach der folgenden Formel bestimmt:

$$VDOS(K)'VDOSt(K)+VDOSt(K)*FM+VDOSt(K)*FE+$$

$$VDOSt(K)*FP,$$

wo:
Fm, FE und FP algebraische Faktoren sind, sich jeweils auf den mikroklimatischen, endogenen Zustand des Baumes und die pedologischen Bedingungen beziehend.

**12.** Vorrichtung nach Patentanspruch 10 oder 11, **dadurch gekennzeichnet, dass** jeder Parameter, der Wert und die Daten betreffend die Berechnung der zu verabreichenden Dosis (VDOS(K)) auf den nationalen geografischen Bereich, welchem der Baum zugehört, beziehbar und für diesen typisch sind, wobei die genannten Daten aus einem von der zentralen Verarbeitungseinheit aus zugänglichen Speicher ablesbar sind.

**13.** Vorrichtung nach einem beliebigen der vorstehenden Patentansprüche, **dadurch gekennzeichnet, dass** die Mittel (3) zum Antreiben der Bewegung des Kolbens (2) enthalten::

- einen Schaft (21) des Kolbens (2), ausgebildet als Wurmschraube;
- eine über den Schaft (21) greifende Mutterschraube (6), koaxial zu dem Zylinder (1) und frei, sich im Verhältnis zu dem Zylinder (1) selbst zu drehen;
- wenigstens einen Motor (7) zum Drehen der Mutterschraube (6) im Verhältnis zu dem Zylinder (1) und zum Übertragen einer Dreh-/Schiebebewegung auf den Schaft (21), um den Kolben (2) zu verschieben;
- wenigstens ein Element (8) zum Führen der Bewegung des Schaftes (21) im Verhältnis zu dem Zylinder (1).

**14.** Vorrichtung nach einem beliebigen der vorstehenden Patentansprüche, **dadurch gekennzeichnet, dass** die Mittel (3) zum Antreiben der Bewegung des Kolbens wenigstens einen Schrittmotor (71) enthalten.

**15.** Vorrichtung nach einem beliebigen der vorstehenden Patentansprüche, **dadurch gekennzeichnet, dass** der Zylinder abnehmbar ist.

**16.** Vorrichtung nach Patentanspruch 15, **dadurch gekennzeichnet, dass** der Zylinder (1) entsorgbar ist, sobald die darin enthaltene Lösung verbraucht ist.

**17.** Vorrichtung nach Patentanspruch 15, **dadurch gekennzeichnet, dass** die Mittel (3) zum Antreiben der Bewegung des Kolbens (2) Mittel (22) zum schnellen Verbinden mit dem Kolben (2) enthalten, um die Antriebsmittel (3) Zylindern (1) von unterschiedlichen Weiten mit Kolben (2) von unterschiedlichen Durchmessern zuzuordnen, während es dem Kolben (2) erlaubt ist, eine wechselweise Bewegung auszuführen.

**18.** Vorrichtung nach einem beliebigen der vorstehenden Patentansprüche, **dadurch gekennzeichnet, dass** der Zylinder (1) einen Einlass (10) für die Lösung und einen Auslass (12) für die Lösung zu der Nadel (41, 42, 43, 44) hin aufweist, und zwar mit entsprechenden Einwegventilen (14, 16), eins (14) zum Zuführen der Lösung und das andere (16) zum Injizieren der Lösung, welche entgegengesetzt zueinander angeordnet sind.

**19.** Vorrichtung nach einem beliebigen der vorstehenden Patentansprüche, **dadurch gekennzeichnet, dass** das Verfahren zum Steuern der Mittel (3) zum Antreiben der Bewegung des Kolbens (2) in dem Zylinder (1) anfänglich wenigstens wie folgt enthält:

- Ablesen der zu verabreichenden Dosis (VDOS) der Lösung, berechnet aus dem Bestimmungsverfahren;
- Erfassen der Ausgangsposition (Di) des Kolbens (2) durch das Ablesen des Signals des Verschiebungsfühlers (5);
- Berechnen eines anfänglichen Volumens (Vi) der in dem Zylinder (1) enthaltenen phytotherapeutischen Lösung, basierend auf der Ausgangsposition (Di) des Kolbens (2) und einem Bereich (fc) eines Abschnittes des Zylinders (1); und anschliessend
- Instruktion zum Aktivieren der Mittel (3) zum Antreiben der Bewegung des Kolbens (2), um den Kolben (2) zu verschieben und die phytotherapeutische Lösung in den Baum zu injizieren, sowie eine Folge von Instruktionen zur Kontrolle der Injektion, zyklisch wiederholt während der Bewegung des Kolbens (2), wenn das injizierte Volumen (VI) der phytotherapeutischen Lösung geringer ist als die zu verabreichende Dosis (VDOS), wobei die Folge der Instruktionen zur Kontrolle der Injektion aufeinanderfolgend enthält:
- Erfassen der aktuellen Position (Dc(Tc)) des Kolbens (2) durch Ablesen des Signals des Verschiebungsfühlers (5);
- Berechnen des augenblicklichen Volumens (Vc(Tc)) der phytotherapeutischen Lösung, die im Moment in dem Zylinder (1) vorhanden ist, basierend auf der aktuellen Position (Dc(Tc)) des Kolbens (2) und auf dem Bereich (fc) des Abschnittes des Zylinders (1);
- Berechnen des injizierten Volumens (VI) der phytotherapeutischen Lösung aus der Differenz zwischen dem Anfangsvolumen (Vi) und dem augenblicklichen Volumen (Vc(Tc));
- Vergleichen zwischen dem injizierten Volumen (VI) und der zu verabreichenden Dosis (VDOS), um zu prüfen, ob die Dosis (VDOS) gereicht hat und, wenn das injizierte Volumen (VI) der Lösung wenigstens der zu verabreichenden Dosis (VDOS) der Lösung entspricht und die Dosis (VDOS) somit gereicht hat, Erteilen eines Befehls zum Anhalten des Vorlaufs des Kolbens (2).

**20.** Vorrichtung nach Patentanspruch 19, **dadurch gekennzeichnet, dass** das Verfahren zum Steuern der Mittel (3) zum Antreiben der Bewegung des Kolbens (2) in dem Zylinder (1) anfangs ausserdem eine Instruktion für die Nullstellung einer Betriebsvariablen (VIOLD) enthält, wobei die Folge der Instruktionen zum Steuern der Injektion ausserdem aufeinanderfolgend und im Anschluss an die Berechnung des injizierten Volumens (VI) der phytotherapeutischen Lösung wie folgt enthält:

- Erhöhung des injizierten Volumens (VI) der phytotherapeutischen Lösung um den Wert der Betriebsvariablen (VIOLD);
- Prüfen des Wertes des aktuellen Volumens (Vc(Tc)) und, wenn das aktuelle Volumen (Vc(Tc)) im wesentlichen Null ist, Durchführen eines Verfahrens zum Nachfüllen des Zylinders (1), unter Anpassen des Wertes der Betriebsvariablen (VIOLD) an den Wert des bisher injizierten Volumens (VI) sowie des Wertes des Anfangsvolumens (Vi) an den Wert des Zylindervolumens (VCIL), und Rückkehr zu der Folge von Instruktionen zum Steuern der Injektion vor dem Vergleich des mit der zu verabreichenden Dosis (VDOS) injizierten Volumens (VI).

**21.** Vorrichtung nach einem beliebigen der Patentansprüche von 1 bis 15, **dadurch gekennzeichnet, dass** der Kolben (2) den Zylinder (1) in eine erste und eine zweite Kammer (18, 19) unterteilt, jede versehen jeweils mit einem ersten und einem zweiten Einlass (10, 11) der Lösung, ausgestattet mit entsprechenden ersten und zweiten Einweg-Einlassventilen (14, 15), sowie mit einem ersten und zweiten Auslass (12, 13) der Lösung zu der Nadel (41, 42, 43, 44) hin, versehen mit ersten und zweiten Einweg-Einspritzventilen (16, 17), wobei die ersten und zweiten Einweg-Einlassventile (14, 15) einander und jeweils den entsprechenden ersten und zweiten Einweg-Einspritzventilen (16, 17) entgegen wirken, um die Lösung in die zweite Kammer (19) zu füllen, während die Lösung aus der ersten Kammer (18) in dem Baum injiziert wird; sowie die Lösung in die erste Kammer (18) zu füllen, während die Lösung aus der zweiten Kammer (19) in dem Baum injiziert wird.

**22.** Vorrichtung nach einem beliebigen der Patentansprüche von 1 bis 15, **dadurch gekennzeichnet, dass** sie einen Hilfszylinder (1a) hat, parallel zu und identisch mit dem Zylinder (1), versehen mit einem entsprechenden Hilfskolben (2a), der in synchronisierter Weise entgegen und gleichzeitig mit dem Kolben (2) arbeitet, welcher der Wirkung der Antriebsmittel (3) unterzogen ist, wobei der Zylinder (1) und der Hilfszylinder (1a) eine entsprechende erste und zweite Kammer (18, 19) bilden, jede versehen jeweils mit einem ersten und einem zweiten Einlass (10, 11) der Lösung, ausgestattet mit entsprechenden ersten und zweiten Einweg-Einlassventilen (14, 15), sowie mit einem ersten und zweiten Auslass (12, 13) der Lösung zu der Nadel (41, 42, 43, 44) hin, versehen mit ersten und zweiten Einweg-Einspritzventilen (16, 17), wobei die ersten und zweiten Einweg-Einlassventile (14, 15) einander und jeweils den entsprechenden ersten und zweiten Einweg-Einspritzventilen (16, 17) entgegen wirken, um die Lösung in die zweite Kammer (19) zu füllen, während die Lösung aus der ersten Kammer (18) in dem Baum injiziert wird; sowie die Lösung in die erste Kammer (18) zu füllen, während die Lösung aus der zweiten Kammer (19) in dem Baum injiziert wird.

**23.** Vorrichtung nach Patentanspruch 21 oder 22, **dadurch gekennzeichnet, dass** das Verfahren zum Steuern der Mittel (3) zum Antreiben der Bewegung des Kolbens (2, 2a) in dem Zylinder (1, 1a) anfangs wie folgt enthält:

- Ablesen der zu verabreichenden Dosis (VDOS) der Lösung, berechnet nach dem Bestimmungsverfahren;
- Erfassen der Ausgangsposition (Di) des Kolbens (2, 2a) durch Ablesen des Signals des Verschiebungsfühlers (5);
- Berechnen des anfänglichen Volumens (Vi) der in dem Zylinder (1, 1a) enthaltenen phytotherapeutischen Lösung, basierend auf der Ausgangsposition (Di) des Kolbens (2, 2a) und auf dem Bereich (fc) eines Abschnittes des Zylinders (1, 1a);
- Instruktion zur Nullstellung einer Betriebsvariablen (VIOLD);
- Berechnen eines ersten und eines zweiten Anfangsvolumens (Vi1, Vi2) der phytotherapeutischen Lösung, enthalten jeweils in der ersten und in der zweiten Kammer (18, 19), basierend auf der Ausgangsposition (Di1, Di2) des Kolbens (2, 2a) und des Bereiches (fc) eines Abschnittes des Zylinders (1, 1a);
- Vergleich zwischen dem ersten und dem zweiten Ausgangsvolumen (Vi1, Vi2) und Übertragen über die Ausgangsschnittstelle (IU) einer Instruktion zur Aktivierung der Antriebsmittel (3) für den Beginn der Injektion der Lösung in den Baum aus der voluminöseren der ersten und zweiten Kammern (18, 19);

und dass es weiter eine Folge von Kontrollinstruktionen der Injektion enthält, zyklisch wiederholt während der Bewegung des Kolbens (2, 2a), wenn das injizierte Volumen (VI) der phytotherapeutischen Lösung geringer ist als die zu verabreichende Dosis (VDOS), wobei die Folge der Kontrollinstruktionen der Injektion aufeinanderfolgend enthält:

- ein Unterverfahren (s. Abbildung 13, unten) zum Berechnen der Werte des augenblicklichen Volumens (Vc1 (Tc), Vc2(Tc)) der Kammer (18, 19), welche die Injektion durchführt, und zum Berechnen des injizierten Volumens (VI) der Lösung als Differenz zwischen dem Anfangsvolumen (Vi1, Vi2) und dem augenblicklichen Volumen (Vc1(Tc), Vc2(Tc)) der die Injektion durchführenden Kammer (18, 19), wobei die Differenz um den Wert der Betriebsvariablen (VIOLD) erhöht wird;

- Vergleich zwischen dem injizierten Volumen (VI) und der zu verabreichenden Dosis (VDOS), um zu prüfen, ob die Dosis (VDOS) gereicht hat und, wenn das injizierte Volumen (VI) der Lösung im wesentlichen gleich der zu verabreichenden Dosis (VDOS) ist und die Dosis (VDOS) somit gereicht hat, Erteilen eines Befehls zum Anhalten des Vorlaufs des Kolbens (2);

- Prüfen des Wertes des augenblicklichen Volumens (Vc1(Tc), Vc2(Tc)) der die Injektion durchführenden Kammer (18, 19) und, wenn das augenblickliche Volumen (Vc1(Tc), Vc2(Tc)) im wesentlichen Null ist, Durchführen eines Verfahrens zum Umkehren der Wirkung der Antriebsmittel (3), unter Anpassen des Wertes der Betriebsvariablen (VIOLD) an den Wert des bisher injizierten Volumens (VI) sowie des Wertes des Anfangsvolumens (Vi1, Vi2) der die Injektion durchführenden Kammer (18, 19) an den Wert des Zylindervolumens (VCIL), und Rückkehr zu der Folge von Kontrollinstruktionen.

24. Vorrichtung nach Patentanspruch 19 oder 20 oder 21, **dadurch gekennzeichnet, dass**:

- sie wenigstens einen Druckfühler enthält, angeschlossen an die zentrale Einheit (CPU) über den Analog-Digital-Umwandler (A/D) und die Eingangsschnittstelle (II) und seinen Druckerfassungspunkt entsprechend zu den Mitteln (4) für den Anschluss der Nadel (41, 42, 43, 44) an den Zylinder (1, 1a) aufweisend, um einen Betriebsdruck (PLc, PLc 1, PLc2) zu messen;

- das Verfahren zum Steuern der Mittel (3) zum Antreiben der Bewegung des Kolbens (2, 2a) in dem Zylinder (1, 1a) anfangs das Ablesen des gewünschten Wertes (PMAX) des maximalen Betriebsdruckes vorsieht, vereinbar mit der Spezies, dem Zustand und den Eigenschaften des Baumes, mit den Umweltdaten und mit der zu injizierenden Lösung;

- die Folge der zyklisch wiederholten Instruktionen nach dem Vergleich zwischen dem injizierten Volumen (VI) und der zu verabreichenden Dosis (VDOS) eine Messung des augenblicklichen Betriebsdruckes (PLc, PLc1, PLc2) mit Hilfe des Druckfühlers (20) vorsieht, sowie die Durchführung eines Unterverfahrens zum Kontrollieren und Regulieren des Betriebsdruckes, welches, basierend auf der Differenz (DP) zwischen dem gewünschten Wert des maximalen Betriebsdruckes (PMAX) und dem augenblicklichen Wert des Betriebsdruckes (PLc, PLc1, PLc2), eine theoretische Variation (VT) berechnet, vorzusehen an der durch die Antriebsmittel (3) auf den Kolben (2) ausgeübte Kraft, um die genannte Differenz (DP) zu korrigieren, und das über die Ausgangsschnittstelle (IU) eine entsprechende reelle Variation (VR) an der durch die Antriebsmittel (3) ausgeübten Kraft vornimmt, um den Wert des Betriebsdruckes (PLc, PLc1, PLc2) auf einem vorgegebenen Abstand von dem gewünschten Wert (PMAX) des maximalen Druckes zu halten.

25. Vorrichtung nach Patentanspruch 24, **dadurch gekennzeichnet, dass** das Verfahren zum Kontrollieren und Regulieren des Betriebsdruckes den augenblicklichen Wert des Betriebsdruckes (PLc, PLc1, PLc2) konstant unter dem gewünschten Wert des maximalen Betriebsdruckes (PMAX) hält.

26. Vorrichtung nach Patentanspruch 24 oder 25, **dadurch gekennzeichnet, dass** die theoretische Variation (VT) auf einem porportional-integral-derivativem Algorithmus (PID) berechnet ist, und dass die reelle Variation (VR) mit der theoretischen Variation (VT) einer Regulierfunktion in Wechselbeziehung steht, die das tatsächliche Verhalten der Antriebsmittel (3) simuliert.

27. Vorrichtung nach Patentanspruch 26, **dadurch gekennzeichnet, dass** die Regulierfunktion wenigstens abschnittsweise linear ist.

28. Vorrichtung nach Patentanspruch 27, **dadurch gekennzeichnet, dass** die Regulierfunktion ein unterbrochener Abschnitt ist.

29. Vorrichtung nach Patentanspruch 27 oder 28, **dadurch gekennzeichnet, dass** die Regulierfunktion wenigstens eine Hysterese in wenigstens einem Abschnitt aufweist.

30. Vorrichtung nach einem beliebigen der Patentansprüche von 24 bis 29, **dadurch gekennzeichnet, dass** das Unterverfahren zum Steuern und Regulieren des Betriebsdruckes über die Ausgangsschnittstelle (IU) die reelle Variation (VR) auf die Kraft bewirkt, die durch die Antriebsmittel (3) mittels einer Folge von vorübergehenden Stopps und Neustarts der Antriebsmittel (3) selbst ausgeübt wird.

**31.** Vorrichtung nach einem beliebigen der Patentansprüche von 24 bis 29, **dadurch gekennzeichnet, dass** das Unterverfahren zum Steuern und Regulieren des Betriebsdruckes über die Ausgangsschnittstelle (IU) die reelle Variation (VR) auf die Kraft bewirkt, die durch die Antriebsmittel (3) mittels einer kontinuierlichen Einstellung der Geschwindigkeit des Kolbens (2, 2a) ausgeübt wird.

**32.** Vorrichtung nach Patentanspruch 19 oder 20 oder 23, **dadurch gekennzeichnet, dass**:

- die zentrale Verarbeitungseinheit (CPU) einen Zeitzähler hat;
- das Verfahren zum Steuern der Mittel (3) für den Antrieb der Bewegung des Kolbens (2, 2a) in dem Zylinder (1) anfangs ein Ablesen eines gewünschten Wertes der maximalen Ansprechzeit (TMAX) vorsieht;
- das Verfahren zum Steuern der Mittel (3) für den Antrieb der Bewegung des Kolbens (2, 2a) eine Initialisierung der Zeitzählung (Tc) durch den Zeitzähler vornimmt;

wobei die Instruktionsfolge einen Vergleich der Zeit (Tc) mit der maximalen Ansprechzeit (TMAX) und den Abruf eines Unterverfahrens zum Anhalten der Vorrichtung vorsieht, wenn das Zeitintervall (Tc) die maximale Ansprechzeit (TMAX) überschreitet.

**33.** Vorrichtung nach einem beliebigen der vorstehenden Patentansprüche, **dadurch gekennzeichnet, dass** die Nadel (42) aussen wenigstens an der Spitze mit einem Gewinde versehen ist, um schraubenartig in eine Bohrung zu greifen, die vorher in dem Stamm des Baumes erhalten ist.

**34.** Vorrichtung nach einem beliebigen der Patentansprüche von 1 bis 33, **dadurch gekennzeichnet, dass** die Nadel (43) aussen wenigstens an der Spitze wenigstens zwei aufeinanderfolgende geformte Elemente (45) aufweist, um in die Wände einer vorher in dem Stamm des Baumes erhaltenen Bohrung zu greifen und wenigstens eine teilweise Dichtung gegen den Verlust von Flüssigkeiten aus dem Stamm selbst zu bilden.

**35.** Vorrichtung nach einem beliebigen der Patentansprüche von 1 bis 3 3, **dadurch gekennzeichnet, dass** die N adel (44) ihre Spitze verschlossen hat, um in den Stamm eingeschlagen werden zu können, wobei eine Kappe (48) zum Schutz der Nadel (44) vorgesehen ist, ohne die Notwendigkeit, vorher in dem Stamm selbst Bohrungen vorzusehen, und wobei die Nadel (44) ausserdem über einen bestimmten Abschnitt ihres Körpers im Anschluss an die Spitze radiale Öffnungen (46) aufweist, um die Lösung in den Baum zu injizieren.

**36.** Vorrichtung nach Patentanspruch 35, **dadurch gekennzeichnet, dass** die Nadel (44) in einem bestimmten Abstand von der Spitze und über die radialen Öffnungen (46) hinaus ein Element (47) zum Kontrollieren des Stammes des Baumes aufweist, um die Einsetztiefe der Nadel (44) in den Stamm zu bestimmen.

**37.** Vorrichtung nach einem beliebigen der vorstehenden Patentansprüche, **dadurch gekennzeichnet, dass** die Anschlussmittel (4) zwischen der Nadel (41, 42, 43, 44) und dem Zylinder (1) eine Schnellverbindung vorsehen.

**38.** Vorrichtung nach einem beliebigen der vorstehenden Patentansprüche, **dadurch gekennzeichnet, dass** die Anschlussmittel (4) zwischen der Nadel (41, 42, 43, 44) und dem Zylinder (1) wenigstens eine flexible Leitung (49) enthalten, die an ihren Enden mit Befestigungsmitteln für den Zylinder (1) und für die Nadel (41, 42, 43, 44) versehen ist.

**39.** Vorrichtung nach einem beliebigen der vorstehenden Patentansprüche, **dadurch gekennzeichnet, dass** sie wenigstens einen Tank (23) für die Lösung enthält, der über wenigstens ein Einweg-Ventil lösbar an dem Zylinder (1) anbringbar ist.

**40.** Vorrichtung nach Patentanspruch 39, **dadurch gekennzeichnet, dass** der Tank (23) in wenigstens einen ersten und einen zweiten Behälter (24, 25) unterteilt ist, enthaltend jeweils eine konzentrierte Lösung und ein Lösungsmittel und gegenseitig miteinander verbunden durch ein Mischventil (26), angeordnet stromaufwärts des Anschlusses an den Zylinder (1).

**41.** Vorrichtung nach Patentanspruch 39 oder 40, **dadurch gekennzeichnet, dass** der Tank (23) entfernt und wenigstens über eine Leitung (27) an den Zylinder (1) angeschlossen ist.

**42.** Vorrichtung nach einem beliebigen der vorstehenden Patentansprüche, **dadurch gekennzeichnet, dass** er tragbar ist.

**43.** Vorrichtung nach Patentanspruch 42, **dadurch gekennzeichnet, dass** er in einem Gehäuse (28) eingeschlossen ist, welches Greifmittel (29) für den Bediener und Steuertasten (30) enthält, zugeordnet dem Gehäuse (28) und leicht erreichbar durch die Hände eines Bedieners, wenn sich die Vorrichtung im Betrieb befindet.

**Revendications**

**1.** Dispositif pour endothérapie de plantes arborées, du type comprenant un vérin creux (1) pourvu d'un piston (2), des moyens (3) d'actionnement du mouvement du piston (2), au moins une aiguille d'injection (41, 42, 43, 44), des moyens (4) pour connecter l'aiguille (41, 42, 43, 44) au vérin (1), pour injecter dans le tronc de la plante au moins une dose (VDOS(K)) d'une formulation phytothérapeutique chargée dans le vérin (1), **caractérisé en ce qu'**il comprend de plus:

- au moins une unité centrale d'élaboration (CPU), pour le contrôle informatisé, automatique et intelligent du dispositif;
- au moins un clavier (TT) pour l'insertion manuelle de données et pour la gestion des commandes du dispositif, connecté à l'unité centrale (CPU);
- au moins un convertisseur digital analogique (A/D) connecté à l'unité centrale (CPU) et accouplé à au moins une interface d'entrée (II) pour conditionner au moins des signaux provenant d'un capteur de déplacement (5) pour détecter la position du piston (2) dans le vérin (1);
- au moins une interface de sortie (IU) interposée entre l'unité centrale d'élaboration (CPU) et les moyens (3) d'actionnement du mouvement du piston (2);

l'unité centrale d'élaboration (CPU) exécutant un programme qui comprend:

- une procédure de détermination de la dose (VDOS (K)) de formulation étant administrée à une plante;
- une procédure de contrôle des moyens (3) d'actionnement du mouvement du piston (2) selon la dose (VDOS (K)) à administrer.

**2.** Dispositif selon la revendication 1, **caractérisé en ce que** l'unité centrale d'élaboration (CPU) comprend au moins une première porte d'entrée/sortie de données, en correspondance d'au moins un périphérique d'entrée/sortie connecté à l'unité centrale (CPU).

**3.** Dispositif selon la revendication 1 ou 2, **caractérisé en ce que** la procédure de détermination de la dose (VDOS (K)) de formulation à administrer à la plante est un corps cyclique répété en séquence autant de fois qu'il y a de plantes à traiter.

**4.** Dispositif selon la revendication 1, 2 ou 3, **caractérisé en ce que** la procédure de détermination de la dose (VDOS (K)) de formulation à administrer à la plante comprend:

- au moins un bloc pour lire au moins les données relatives aux espèces, à l'état et aux caractéristiques de la plante, données relatives à au moins une formulation pouvant être administrée à la plante, en fonction de son adversité ou prévention de cette dernière, ainsi que des données environnementales;
- au moins une première sous-procédure pour élaborer la dose (VDOS(K)) de formulation à administrer à la plante en fonction des données lues dans le bloc de lecture.

**5.** Dispositif selon la revendication 4, **caractérisé en ce que** le bloc de lecture comprend des données géographiques détaillées pour localiser la plante.

**6.** Dispositif selon la revendication 4 ou 5, **caractérisé en ce que** les données acquises par le bloc de lecture sont subdivisées en au moins une première série de données acquises *ex-situ* avant un traitement endothérapique de la plante et dans une seconde série de données acquises *in-situ* au moins pendant la préparation du traitement endothérapique.

**7.** Dispositif selon la revendication 6, **caractérisé en ce qu'**à la première série de données appartiennent au moins:

- des données concernant les espèces des plantes;
- des données concernant l'état de santé de la plante;
- des données concernant le nombre d'années passées depuis le dernier élagage;
- données concernant les caractéristiques de la plante;
- données concernant au moins une formulation pouvant être administrée à la plante;
- données géographiques de la plante;
- adresse de la plante;

et qu'à la seconde série de données appartiennent au moins:

- données climatiques locales de la plante;
- données concernant les caractéristiques de la plante;
- conditions pédologiques du terrain.

8. Dispositif selon la revendication 7, **caractérisé en ce que**:

- les caractéristiques de la plante comprennent au moins une circonférence de tronc et une hauteur de plante, un nombre de branches de la plante, ainsi que des données concernant l'état endogène de la plante;
- les données géographiques de la plante comprennent au moins la nation d'appartenance, la latitude et la longitude;
- les données climatiques locales comprennent au moins la température ambiante, l'humidité relative, la radiation lumineuse;
- les conditions pédologiques du terrain comprennent au moins la texture, le pH, la composition du sol locale, ainsi que la balance hydrique.

9. Dispositif selon n'importe laquelle des revendications 6 à 8, **caractérisé en ce qu'**il comprend des capteurs auxiliaires (SA), connectés au moins à une première porte d'entrée/sortie de données, en correspondance d'au moins un périphérique d'entrée/sortie (I/O) connecté à l'unité centrale d'élaboration (CPU), pour mesurer au moins une partie de la seconde série de données.

10. Dispositif selon n'importe laquelle des revendications 4 à 6, **caractérisé en ce que** l'état de la plante comprend au moins ses conditions de santé et le nombre d'années depuis le dernier élagage et **en ce que** la première sous-procédure d'élaboration de la dose (VDOS(K)) de formulation prévoit un calcul selon la formule suivante:

$$VDOS(K)'DB*FC*Z*SF*AP,$$

où:

DB est la valeur d'une dose de base de formulation concentrée, évaluée en cc de formulation tous les 10 cm de circonférence de tronc mesurée à une hauteur de 1 m du sol;
FC est un facteur de circonférence du tronc, identifié en tant que mesure de la longueur de la circonférence divisée par 10 et en corrélant les dimensions de la plante à la dose à administrer;
Z est le volume de formulation, tous les 10 cm de circonférence du tronc, par unité de dose de base de formulation concentrée;
SF est un coefficient lié aux conditions de santé de la plante;
AP est un coefficient lié au nombre d'années depuis le dernier élagage.

11. Dispositif selon n'importe laquelle des revendications 7 à 9, **caractérisé en ce que**:

- l'état de la plante comprend au moins sa condition de santé et le nombre d'années depuis le dernier élagage;
- la première sous-procédure d'élaboration de la dose de formulation prévoit un calcul selon la formule suivante:

$$VDOSt(K)'DB*FC*Z*SF*AP,$$

où:

VDOSt(K) indique une valeur de dosage préliminaire;
DB est la valeur d'une dose de base de formulation concentrée, évaluée en cc de formulation tous les 10 cm de circonférence de tronc mesurée à une hauteur de 1 m du sol;
FC est un facteur de circonférence du tronc, identifié comme mesure de la longueur de la circonférence divisée par 10 et corrélant les dimensions de la plante à la dose à administrer;
Z est le volume de formulation, tous les 10 cm de circonférence de tronc, par unité de dose de base de formulation concentrée;
SF est un coefficient relatif aux conditions de santé de la plante;
AP est un coefficient relatif au nombre d'années depuis le dernier élagage;
la première sous-procédure de calcul étant suivie de l'exécution d'une seconde sous-procédure de calcul de la dose de formulation, qui applique des termes de correction du dosage au moins selon la formule suivante:

$$\text{VDOS(K)'VDOSt(K)+VDOSt(K)*FM+VDOSt(K)*FE+VDOSt(K)*FP,}$$

où:

FM, FE et FP sont des facteurs algébriques relatifs, respectivement, à un microclimat, un état endogène de la plante et des conditions pédologique.

**12.** Dispositif selon la revendication 10 ou 11, **caractérisé en ce que** chaque paramètre, valeur et donnée relatifs au calcul de la dose (VDOS(K)) à administrer peuvent se référer et être **caractérisés par** la zone géographique nationale à laquelle la plante appartient, lesdites données pouvant être lues dans une mémoire accessible à l'unité centrale d'élaboration.

**13.** Dispositif selon n'importe laquelle des revendications précédentes, **caractérisé en ce que** les moyens (3) d'actionnement du mouvement du piston (2) comprennent:

- une tige (21) du piston (2) conformée comme une vis sans fin;
- une vis femelle (6) engagée sur la tige (21), coaxiale au vérin (1), et libre de pivoter par rapport au vérin (1) lui-même;
- au moins un moteur (7) pour pivoter la vis femelle (6) par rapport au vérin (1) et transmettre un mouvement de rotation-translation à la tige (21) pour translater le piston (2);
- au moins un élément (8) de guidage du mouvement de la tige (21) par rapport au vérin (1).

**14.** Dispositif selon n'importe laquelle des revendications précédentes, **caractérisé en ce que** les moyens (3) d'actionnement du mouvement du piston comprennent au moins un moteur pas-à-pas (71).

**15.** Dispositif selon n'importe laquelle des revendications précédentes, **caractérisé en ce que** le vérin est amovible.

**16.** Dispositif selon la revendication 15, **caractérisé en ce que** le vérin (1) est jetable une fois que la formulation qu'il contient est épuisée.

**17.** Dispositif selon la revendication 15, **caractérisé en ce que** les moyens (3) d'actionnement du mouvement du piston (2) comprennent des moyens (22) d'accouplement rapide avec le piston (2), de manière à associer aux moyens d'actionnement (3) les vérins (1) ayant de différentes sections avec des pistons (2) ayant de différents diamètres tout en permettant au piston (2) d'effectuer un mouvement alternatif.

**18.** Dispositif selon n'importe laquelle des revendications précédentes, **caractérisé en ce que** le vérin (1) comprend une entrée (10) pour la formulation et une sortie (12) de la formulation vers l'aiguille (41, 42, 43, 44), avec de correspondantes valves unidirectionnelles (14, 16), une valve (14) pour alimenter la formulation, l'autre (16) pour injecter la formulation, mutuellement opposées.

**19.** Dispositif selon n'importe laquelle des revendications précédentes, **caractérisé en ce que** la procédure de contrôle des moyens (3) pour actionner le mouvement du piston (2) dans le vérin (1) comprennent initialement au moins:

- une lecture de la dose (VDOS) de formulation à administrer calculée à partir de la procédure de détermination;
- une détection de la position initiale (Di) du piston (2) au travers d'une lecture du signal du capteur de déplacement (5);
- un calcul d'un volume initial (Vi) de la formulation phytothérapeutique contenue dans le vérin (1), basée sur la position initiale (Di) du piston (2) et sur la zone (fc) d'une section du vérin (1);

et, en succession:

- une instruction pour activer les moyens (3) d'actionnement du mouvement du piston (2), pour déplacer le piston (2) et injecter la formulation phytothérapeutique dans la plante, ainsi qu'une séquence d'instructions pour le contrôle de l'injection, cycliquement répétée pendant le mouvement du piston (2) si le volume injecté (VI) de formulation phytothérapeutique est inférieur à la dose (VDOS) à administrer, la séquence d'instructions pour le contrôle de l'injection comprenant, en succession:
- détection d'une position courante (Dc(Tc)) du piston (2) par lecture du signal du capteur de déplacement (5);
- calcul d'un volume courant (Vc(Tc) de formulation phytothérapeutique couramment présente dans le vérin (1) sur la base de la position courante (Dc(Tc)) du piston (2) et sur la zone (fc) de la section du vérin (1);
- calcul du volume injecté (VI) de la formulation phytothérapeutique à partir de la différence entre le volume initial (Vi) et le volume courant (Vc(Tc));
- comparaison entre le volume injecté (VI) et la dose (VDOS) à administrer pour vérifier si la dose (VDOS) a été atteinte et, si le volume injecté (VI) de formulation est au moins égal à la dose (VDOS) de formulation à administrer et si la dose (VDOS) a donc été atteinte, le rappel d'une commande pour stopper l'avancée du piston (2).

20. Dispositif selon la revendication 19, **caractérisé en ce que** la procédure de contrôle des moyens (3) d'actionnement du mouvement du piston (2) dans le vérin (1) comprennent initialement en outre une instruction pour réinitialiser à zéro une variable de service (VIOLD), la séquence d'instructions pour le contrôle de l'injection comprenant, en succession, suite au calcul du volume injecté (VI) de formulation phytothérapeutique:

- une augmentation du volume injecté (VI) de formulation phytothérapeutique par la valeur de la variable de service (VIOLD);
- vérification de la valeur du volume courant (Vc(Tc)) et, si le volume courant (Vc(Tc)) est substantiellement nul, exécution d'une procédure de remplissage du vérin (1), mise à jour de la valeur de la variable de service (VIOLD) à la valeur du volume (VI) injecté jusque là, ainsi que la valeur du volume initial (Vi) à la valeur du volume du vérin (VCIL) et retour à la séquence des instructions de contrôle de l'injection avant comparaison du volume injecté (VI) avec la dose (VDOS) à administrer.

21. Dispositif selon n'importe laquelle des revendications 1 à 15, **caractérisé en ce que** le piston (2) divise le vérin (1) en une première et une seconde chambre (18, 19), toutes deux pourvues, respectivement, d'une première et d'une seconde entrée (10, 11) de la formulation pourvues de correspondantes premières et secondes valves d'alimentation (14, 15), ainsi que d'une première et seconde sortie (12, 13) de la formulation vers l'aiguille (41, 42, 43, 44) pourvues de correspondantes première et seconde valve d'injection unidirectionnelle (16, 17), la première et la seconde valve d'alimentation unidirectionnelle (14, 15) agissant en opposition entre elles et, respectivement, aux correspondantes première et seconde valve d'injection unidirectionnelle (16, 17), pour charger la formulation dans la seconde chambre (19) pendant l'injection de la formulation dans la plante à partir de la première chambre (18), ainsi que pour charger la formulation dans la première chambre (18) pendant l'injection de la formulation dans la plante à partir de la seconde chambre (19).

22. Dispositif selon n'importe laquelle des revendications 1 à 15, **caractérisé en ce qu'**il comprend un vérin auxiliaire (1a), en parallèle et identique au vérin (1), pourvu du relatif piston auxiliaire (2a), opérant, de manière synchronisée, en opposition et simultanément au piston (2) soumis à l'action des moyens d'actionnement (3), le vérin (1) et le vérin auxiliaire (1a) définissant les correspondantes première et seconde chambre (18, 19), chacune étant pourvue, respectivement, d'une première et seconde entrée (10, 11) de la formulation pourvues de correspondantes première et seconde valve d'alimentation unidirectionnelle (14, 15), ainsi qu'une première et seconde sortie (12, 13) de la formulation vers l'aiguille (41, 42, 43, 44) pourvues de correspondantes première et seconde valve d'alimentation unidirectionnelle (14, 15) agissant en opposition mutuelle et, respectivement, en opposition à la correspondante première et seconde valve d'injection unidirectionnelle (16, 17), pour charger la formulation dans la seconde chambre (19), tout en injectant la formulation dans la plante à partir de la première chambre (18), ainsi que pour charger la formulation dans la première chambre (18) tout en injectant la formulation dans la plante à partir de la seconde chambre (19).

**23.** Dispositif selon la revendication 21 ou 22, **caractérisé en ce que** la procédure de contrôle des moyens (3) d'actionnement du mouvement du piston (2, 2a) dans le vérin (1, 1a) comprend initialement au moins:

- une lecture de la dose (VDOS) de formulation à administrer calculée à partir de la procédure de détermination;
- une détection de la position initiale (Di) du piston (2, 2a) à travers une lecture du signal du capteur de déplacement (5);
- un calcul du volume initial (Vi) de la formulation phytothérapeutique contenue dans le vérin (1, 1a), basée sur la position initiale (Di) du piston (2, 2a) et sur l'aire (fc) d'une section du vérin (1, 1a);
- une instruction pour initialiser à zéro une variable de service (VIOLD);
- un calcul d'un premier et d'un second volume initial (Vi1, Vi2) de la seconde formulation phytothérapeutique contenue respectivement dans la première et la seconde chambre (18, 19), basée sur la position initiale (Di1, Di2) du piston (2, 2a) et sur la zone (fc) d'une section du vérin (1, 1a) ;
- une comparaison entre le premier et le second volume initial (Vi1, Vi2) et une transmission, au travers de l'interface de sortie (IU), d'une instruction pour activer les moyens actionneurs (3) pour activer l'injection de la formulation dans la chambre à partir de la plus volumineuse des premières et secondes chambres (18, 19);

et comprend de plus une séquence d'instructions de contrôle de l'injection, cycliquement répétées pendant le mouvement du piston (2, 2a) si le volume injecté (VI) de formulation phytothérapeutique est inférieur à la dose (VDOS) à administrer, la séquence des instructions de contrôle de l'injection comprenant, en succession:

- une sous-procédure (voir la figure 13, en bas) pour calculer les valeurs du volume courant (Vc1(Tc), Vc2(Tc)) de la chambre (18, 19) opérant l'injection et pour calculer le volume injecté (VI) de formulation comme différence entre le volume initial (Vi1, Vi2) et le volume courant (Vc1(Tc), Vc2(Tc)) de la chambre (18, 19) opérant l'injection, la différence étant augmentée par la valeur de la variable de service (VIOLD);
- une comparaison entre le volume injecté (VI) et la dose (VDOS) à administrer pour vérifier si la dose (VDOS) a été atteinte et, si le volume injecté (VI) de formulation est substantiellement égal à la dose (VDOS) de formulation à administrer et la dose (VDOS) a donc été atteinte, rappel à une commande d'arrêt de l'avancée du piston (2, 2a);
- vérification de la valeur du volume courant (Vc1 (Tc), Vc2 (Tc)) de la chambre (18, 19) opérant l'injection et, si le volume courant (Vc1 (Tc), Vc2 (Tc)) est substantiellement nul, exécution d'une procédure d'inversion de l'action des moyens actionneurs (3), mise à jour de la valeur de la variable de service (VIOLD) à la valeur du volume injecté (VI) jusque là, et la valeur du volume initial (Vi1, Vi2) de la chambre (18, 19) opérant l'injection de la valeur du volume du vérin (VCIL) et retour à la séquence des instructions de contrôle.

**24.** Dispositif selon la revendication 19, 20 ou 23, **caractérisé en ce que**:

- il comprend au moins un capteur de pression, connecté à l'unité centrale (CPU) au travers du convertisseur digital analogique (A/D) et l'interface d'entrée (II) et ayant son point de détection de la pression en correspondance des moyens (4) pour connecter l'aiguille (41, 42, 43, 44) au vérin (1, 1a) pour mesurer une pression d'exercice (PLc, PLc1, PLc2);
- la procédure de contrôle des moyens (3) pour actionner le mouvement du piston (2, 2a) dans le vérin (1, 1a) prévoit initialement une lecture de la valeur désirée (PMAX) de pression d'exercice maximum compatible avec les espèces, état et caractéristiques de la plante, avec des données environnementales, et avec la formulation à injecter;
- la séquence d'instructions cycliquement répétées prévoit, après la comparaison entre le volume injecté (VI) et la dose à administrer (VDOS), une mesure de la pression d'exercice courante (PLc, PLc1, PLc2) au moyen du capteur de pression (20) et l'exécution d'une sous-procédure pour le contrôle et la régulation de la pression d'exercice qui évalue, sur la base d'une différence (DP) entre la valeur distale de la pression d'exercice maximum (PMAX) et la valeur courante de la pression d'exercice (PLc, PLc1, PLc2), une variation théorique (VT) à apporter à la force appliquée par les moyens actionneurs (3) sur le piston (2, 2a) pour corriger ladite différence (DP) et impose, au travers de l'interface de sortie (IU), une correspondante variation réelle (VR) à la force appliquée par les moyens actionneurs (3), pour maintenir la valeur de la pression d'exercice (PLc, PLc1, PLc2) à une distance prédéterminée à partir de la valeur désirée (PMAX) de la pression maximum.

**25.** Dispositif selon la revendication 24, **caractérisé en ce que** la procédure de contrôle et de régulation de la pression d'exercice maintient la valeur courante de la pression d'exercice (PLc, PLc1, PLc2) constamment inférieure à la valeur désirée de la pression d'exercice maximum (PMAX).

**26.** Dispositif selon la revendication 24 ou 25, **caractérisé en ce que** la variation théorique (VT) est calculée sur la base d'un algorithme proportionnel-intégral-dérivatif (PID) et **en ce que** la variation réelle (VR) est corrélée à la variation théorique (VT) d'une fonction de régulation qui simule le réel comportement des moyens d'actionnement (3).

**27.** Dispositif selon la revendication 26, **caractérisé en ce que** la fonction régulatrice est linéaire au moins en segments.

**28.** Dispositif selon la revendication 27, **caractérisé en ce que** la fonction régulatrice est une ligne interrompue.

**29.** Dispositif selon la revendication 27 ou 28, **caractérisé en ce que** la fonction régulatrice présente au moins une hystérésis dans au moins un segment.

**30.** Dispositif selon n'importe laquelle des revendications 24 à 29, **caractérisé en ce que** la sous-procédure de contrôle et de régulation de la pression d'exercice impose, au travers de l'interface de sortie (IU), la variation réelle (VR) à la force appliquée par les moyens actionneurs (3) au travers d'une succession d'arrêts temporaires et de nouveaux départs des moyens d'actionnement (3) eux-mêmes.

**31.** Dispositif selon n'importe laquelle des revendications 24 à 29, **caractérisé en ce que** la sous-procédure de contrôle et de régulation de la pression d'exercice impose, au travers de l'interface de sortie (IU), la variation réelle (VR) à la force appliquée par les moyens actionneurs (3) au moyen d'un ajustement continu de la vitesse du piston (2, 2a).

**32.** Dispositif selon la revendication 19, 20 ou 23, **caractérisé en ce que**:

- l'unité centrale d'élaboration (CPU) comprend un compteur de temps;
- la procédure de contrôle des moyens (3) d'actionnement du mouvement du piston (2, 2a) dans le vérin (1, 1a) prévoit initialement une lecture d'une valeur désirée de temps maximum d'intervention (TMAX);
- la procédure de contrôle des moyens (3) pour actionner le mouvement du piston (2, 2a) dans le vérin (1, 1a) prévoit, successivement à l'instruction de démarrage des moyens (3) d'actionnement du mouvement du piston (2, 2a), une initialisation (T0) de décompte du temps (Tc) par le compteur de temps;

la séquence des instructions prévoyant une comparaison du temps (Tc) avec le temps d'intervention maximum (TMAX) et rappelant une sous-procédure pour arrêter le dispositif si l'intervalle de temps (Tc) excède le temps d'intervention maximum (TMAX).

**33.** Dispositif selon n'importe laquelle des revendications précédentes, **caractérisé en ce que** l'aiguille (42) est extrêmement filetée au moins en correspondance de la pointe pour l'engagement en vissage dans un orifice auparavant obtenu dans le tronc de la plante.

**34.** Dispositif selon n'importe laquelle des revendications 1 à 33, **caractérisé en ce que** l'aiguille (43), au moins en correspondance de la pointe, présente extérieurement au moins deux éléments conformés (45), pour s'agripper aux parois d'un orifice auparavant prévu dans le tronc de la plante et détermine au moins une tenue partielle contre la fuite de liquide du tronc lui-même.

**35.** Dispositif selon n'importe laquelle des revendications 1 à 33, **caractérisé en ce que** l'aiguille (44) présente sa pointe fermée pour pouvoir être insérée dans le tronc par martelage, un capuchon (48) étant prévu pour protéger l'aiguille (44), sans aucun besoin d'orifices auparavant obtenus dans le tronc lui-même, l'aiguille (44) présentant de plus, pour un segment prédéterminé de son propre corps successif à la pointe, des ouvertures radiales (46) pour injecter la formulation dans la plante.

**36.** Dispositif selon la revendication 35, **caractérisé en ce que** l'aiguille (44) présente, à une distance prédéterminée de la pointe et au-delà des ouvertures radiales (46), un élément (47) de butée contre le tronc de la plante pour déterminer la profondeur d'insertion de l'aiguille (44) dans le tronc.

**37.** Dispositif selon n'importe laquelle des revendications précédentes, **caractérisé en ce que** les moyens de connexion (4) entre l'aiguille (41, 42, 43, 44) et le vérin (1) prévoient un accouplement rapide.

**38.** Dispositif selon n'importe laquelle des revendications précédentes, **caractérisé en ce que** les moyens de connexion (4) entre l'aiguille (41, 42, 43, 44) et le vérin (1) comprennent au moins un conduit flexible (49) pourvu, sur ses extrémités, de moyens de fixation pour le vérin (1) et pour l'aiguille (41, 42, 43, 44).

**39.** Dispositif selon n'importe laquelle des revendications précédentes, **caractérisé en ce qu'**il comprend au moins un réservoir (23) de formulation pouvant être relié de manière amovible au vérin (1) par l'intermédiaire d'au moins une valve unidirectionnelle.

**40.** Dispositif selon la revendication 39, **caractérisé en ce que** le réservoir (23) est subdivisé en au moins un premier et un second conteneur (24, 25), contenant respectivement une formulation concentrée et un solvant et mutuellement connectés par une valve de mélange (26) située en amont de la connexion au vérin (1).

**41.** Dispositif selon la revendication 39 ou 40, **caractérisé en ce que** le réservoir (23) est à distance et connecté au vérin (1) au moins par l'intermédiaire d'un tube (27).

**42.** Dispositif selon n'importe laquelle des revendications précédentes, **caractérisé en ce qu'**il est portable.

**43.** Dispositif selon la revendication 42, **caractérisé en ce qu'**il est enfermé dans une enveloppe (28) qui comprend des moyens de préhension (29) pour l'opérateur et des touches de commande (30) associées à l'enveloppe (28) et facilement atteignables par les mains d'un opérateur lorsque le dispositif est en fonctionnement.

FIG. 1

Fig. 2

Fig. 3

Fig. 4

Fig.5

Fig. 6

EP 1 205 103 B1

FIG. 8

FIG. 9

FIG. 7

```
        ┌─────────────────────────────────┐
        │  PROCEDURE FOR DETERMINING       │
        │  FORMULATION DOSE                │
        └─────────────────────────────────┘
                      │
                ┌──────────┐
                │  K ← 1   │
                └──────────┘
                      │
        ┌─────────────────────────────────┐
        │  READ "EX-SITU" DATA PLANT K     │
        │                                  │
        │                                  │
        │  READ N ( PLANTS TO BE TREATED ) │
        └─────────────────────────────────┘
                      │
        ┌─────────────────────────────────┐
        │  PRELIMINARY COMPUTATION OF      │
        │  DOSAGE VALUE VDOS (K)           │
        └─────────────────────────────────┘
                      │
        ┌─────────────────────────────────┐
        │  READ "IN SITU" DATA PLANT K     │
        │                                  │
        │                                  │
        └─────────────────────────────────┘
                      │
        ┌─────────────────────────────────┐
        │  APPLY VDOS (K) CORRECTION       │
        │  TERMS: FINAL VDOS (K)           │
        │  COMPUTATION                     │
        └─────────────────────────────────┘
                      │
        ┌─────────────────────────────────┐
        │  STORE VDOS (K)                  │
        └─────────────────────────────────┘
                      │
              ◇ K = N ? ◇
              │        │
     ┌────────┘ NO     │ YES
     │  ┌──────────┐   │
     │  │ K ← K+1  │   │
     │  └──────────┘
        ┌─────────────────────────────────┐   ┌──────┐
        │  ACTUATE CYLINDER PISTON FOR N   │───│ STOP │
        │  DOSAGES OF N PLANTS             │   └──────┘
        └─────────────────────────────────┘
```

FIG.10

FIG. 11

PISTON CONTROL PROCEDURE

READ: VDOS;∅c;L;Tc;Di1;Di2;TMAX;AT;
PMAX;VIOLD ← 0

Vi1 ← ∅c.Di1;  Vi2 ← ∅c.Di2

Vi1 ≥ Vi2?

COMMAND DISCHARGE Vi1   ← YES

NO →   COMMAND DISCHARGE Vi2

Tc ← To

COMPUTE Vc1(Tc)  OR Vc2(Tc) AND VI

OUT OF TIME?   YES   ERROR

NO

VI = VDOS?   YES   STOP ADVANCE   STORE:VDOS;PL; Tc-To;.....

NO

Vc1(Tc); =0?   YES   VIOLD ← VI   PRINT
Vc2(Tc);

STOP

INVERT ADVANCE

Vi1 or Vi2 ← VCIL

READ PLc1 or PLc2

CONTROL PLc1 or PLc2

Tc ← Tc+ΔT

FIG.12

36

FIG.13

**EP 1 205 103 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2231763 A